# EUROPEAN PATENT APPLICATION

(11) **EP 4 672 525 A1**
(43) Date of publication of application: **31.12.2025**
(21) Application number: 25177913.8
(22) Date of filing: 21.05.2025
(51) Int. Cl.: H02G 3/14, H02G 3/08, G02B 6/44

(54) **CABLE ENCLOSURE AND CABLE PROTECTION SYSTEM COMPRISING SUCH A CABLE ENCLOSURE**

(30) Priority: 25.06.2024 IT 202400014530
(71) Applicant: Prysmian S.p.A., 20126 Milan (IT)
(72) Inventor: Abbiati, Fabio, I-20126 Milano (IT)
(74) Representative: Porta & Consulenti Associati S.p.A.

(57) **Abstract**

A cable enclosure (1) comprises a frame (10)configured to support or house cable connections, a first lid (50) and a first hinge assembly (20) that rotatably connects the first lid (50) to the frame (10). The first hinge assembly (20) comprises at least two first retaining elements (22a, 22b, 22c) projecting outwardly from an outer surface (12a) of a first wall (12) of the frame (10) and at least one first mounting element (27) projecting outwardly from a first wall (52) of the first lid (50). The at least two first retaining elements (22a, 22b, 22c) are arranged in staggered positions on opposite sides with respect to a first longitudinal axis (A1) defined on the first wall (12) of the frame (10). Each of the at least two first retaining elements (22a, 22b, 22c) comprises a respective channel extending along a reference axis parallel to said first longitudinal axis (A1) and having a longitudinal opening facing said reference axis. The first mounting element (27) comprises a cylindrical pin rotatably housed in said channels and a first connecting portion that connects the cylindrical pin to the first wall (52) of the first lid (50). The first connecting portion comprises an end portion adjacent to the cylindrical pin and having a thickness lower than a diameter of the cylindrical pin, said end portion being configured to slide into the longitudinal opening of each of said channels so as to house the cylindrical pin inside said channels upon a sliding movement of the first lid (50) with respect to the frame (10) along said reference axis.

## Description

### Technical field

The present disclosure relates to a cable enclosure configured to house optical and/or electric cables connections.

This disclosure also relates to a cable protection system comprising an external box and the abovementioned cable enclosure, the cable enclosure being arranged within the external box.

Just for making the reading of this disclosure easier, explicit reference will be made throughout the following description and in the claims to optical and/or electrical cable connections, herein simply referred to as "cable connections". However, other components can be housed in the cable enclosure in place of, or together with, the cable connections, like for example passive and active equipment for cable TV broadcasting or fiber optic broadband networks.

### Background art

Cable enclosures are typically used to support in an organized manner cable connections.

Cable enclosures should allow both protection of the cable connections from hostile agents, as for example dust, and easy access of authorized technicians to facilitate and expedite installation and maintenance operations.

To this end, a cable enclosure can comprise a frame that supports or houses the cable connections and a lid connected to the frame and movable from an open position to a closed position. When the lid is in the closed position, the lid covers the area of the frame where the cable connections are provided, so as to protect the latter. When the lid is in the open position, it is possible for the technicians to have access to the frame for installation and maintenance operations.

An external box can be arranged around the cable enclosure to protect the latter and avoid people other than the authorized technicians to have access to the cable connections.

### Summary of the invention

The Applicant has observed that, when a technician accesses the frame of a cable enclosure for performing maintenance and installation operations, the fewer the operations the technician has to deal with, the simpler and quicker the operations are.

Accordingly, the Applicant has thought to provide a cable enclosure in which the lid is rotatably connected to the frame by a hinge assembly. Indeed, the hinge assembly allows the lid to remain connected to the frame upon having moved the lid from the closed position to the open position, so that the technician does not have to put down the lid somewhere before operating on the frame.

The Applicant has observed that a hinge assembly typically comprises a cylindrical pin housed in a channel of a retaining element.

The Applicant has thought that, in order to make the mounting of the lid onto the frame as simpler and quicker as possible, it is advisable to provide the cylindrical pin on a wall of the lid and the retaining element on a wall of the frame.

The Applicant has also observed that it is advisable for the hinge assembly to be provided at an outer surface of the wall of the frame so as to leave as much space as possible in the frame for the cable connections.

However, the Applicant has observed that there can be cases where a very little space is provided between the cable enclosure and the external box, so that the hinge assembly should be very compact.

The Applicant has thought that a very compact hinge assembly can be obtained if the cylindrical pin is housed inside the channel of the retaining element upon a sliding movement of the lid with respect to the frame. Indeed, in such a case, upon having brought the lid close to the frame at a front surface of the latter, no further space is needed on the side of the frame for connecting the lid to the frame.

The Applicant has also thought that in order to obtain an effective hinge assembly wherein the cylindrical pin can slide inside the channel of the retaining element after having brought the lid close to the frame as discussed above, it is advisable to split the channel in at least two distinct retaining elements which are arranged on the outer wall of the frame in staggered positions along the sliding direction of the lid, and to provide each of these channels with a respective longitudinal opening faced toward the inside of the channel.

Correspondingly, it is advisable that, close to the cylindrical pin, the lid's wall is provided with a thin portion having a thickness lower than the diameter of the cylindrical pin, so as to allow the cylindrical pin to slide inside the channels when the lid slides with respect to the frame.

Indeed, the Applicant has realized that housing the cylindrical pin in at least two distinct channels arranged in staggered positions along the sliding direction of the lid allows the hinge assembly to have a longitudinal extension greater than that of possible other solutions wherein the cylindrical pin is arranged in a single channel provided in a single retaining element, to the benefit of the effectiveness of the hinge assembly in operation.

Furthermore, providing each of the channels with a respective longitudinal opening facing toward the inside of the respective channel and the lid's wall with the abovementioned thin portion allows the cylindrical pin to slide inside the channels when the lid slides with respect to the frame.

Accordingly, the present disclosure relates, in a first aspect thereof, to a cable enclosure comprising:
- a frame;
- a first lid;
- a first hinge assembly that rotatably connects the first lid to the frame, the first hinge assembly comprising at least two first retaining elements projecting outwardly from an outer surface of a first wall of the frame and at least one first mounting element projecting outwardly from a first wall of the first lid;

wherein the at least two first retaining elements are arranged in staggered positions on opposite sides with respect to a first longitudinal axis defined on the first wall of the frame, each of the at least two first retaining elements comprising a respective channel extending along a reference axis parallel to said first longitudinal axis and having a longitudinal opening facing said reference axis;
wherein the at least one first mounting element comprises a cylindrical pin rotatably housed in said channels and a first connecting portion that connects the cylindrical pin to the first wall of the first lid;
wherein the first connecting portion comprises an end portion adjacent to the cylindrical pin and having a thickness lower than a diameter of the cylindrical pin, said end portion being configured to slide into the longitudinal opening of each of said channels so as to house the cylindrical pin inside said channels upon a sliding movement of the first lid with respect to the frame along said reference axis.

The cable enclosure of this disclosure comprises a very compact and effective hinge assembly that allows the first lid to be easily and quickly mounted on the frame.

In particular, thanks to the provision of at least two first retaining elements in staggered positions on the frame, of a channel in each of the first retaining elements, of a longitudinal opening in each of the channels and of a thin portion on the first lid close to the cylindrical pin, the first lid can be brought close to the front surface of the frame and, subsequently, slide with respect to the frame, without such a sliding movement being hindered by the first retaining elements. The final housing of the cylindrical pin within the channels of the at least two first retaining elements allows a sufficiently extended rotatable coupling between the first lid and the frame to be obtained, to the benefit of the stability and effectiveness of such a coupling.

The hinge assembly is provided on an outer surface of the frame, thus leaving in the frame as much space as possible for the cable connections and allowing the latter to be easily and quickly accessed by a technician upon having opened the lid. Once opened, the first lid remains connected to the frame, which allows the technician to operate immediately on the cable connections.

The compactness of the hinge assembly allows the cable enclosure to be used also in those cases where a very little space is provided between the cable enclosure and the external box.

The longitudinal openings in the channels as well as the staggered position of the at least two first retaining element allows the first lid to slide with respect to the frame when the first lid is at a predetermined angular position with respect to the frame, that is when the first wall of the first lid is at a predetermined opening angle with respect to the first wall of the frame.

In some embodiments, such a predetermined opening angle is equal to 90°.

In some embodiments, the at least two first retaining elements are identical to each other. In this way the design and manufacturing of the frame is particularly simple.

In some embodiments, the first wall of the frame extends along a vertical direction.

In some embodiments, the first wall of the first lid extends along a vertical direction. In this case, the first wall of the first lid is a first lateral wall of the first lid.

In some embodiments, the first wall of the first lid has, at least at the free end thereof, a planar surface.

In the above embodiments, the first longitudinal axis extends along a vertical direction.

In other embodiments, the first wall of the frame extends along a horizontal direction.

In these other embodiments, the first wall of the first lid extends along a horizontal direction.

In particular, the first wall of the first lid is a top wall of the first lid.

In these other embodiments, the first longitudinal axis extends along a horizontal direction.

In some embodiments, the length of the first wall of the first lid along the first longitudinal axis is less than a length of the first wall of the frame along the first longitudinal axis. In this case, the first wall of the lid, the first wall of the frame and the first longitudinal axis preferably extend all along a vertical direction.

In other embodiments, the length of the first wall of the first lid along the first longitudinal axis is equal to the length of the first wall of the frame along the first longitudinal axis. In this case, the first wall of the first lid, the first wall of the frame and the first longitudinal axis preferably extend all along a horizontal direction.

In some embodiments, the at least two first retaining elements have a height from the first wall of the frame substantially equal to the diameter of the cylindrical pin. This feature allows a very compact hinge assembly to be obtained.

Throughout the present disclosure, the term "substantially equal" referred to the height of the retaining elements is used to encompass not only an embodiment in which the height of the retaining elements from the first wall of the frame is equal to the diameter of the cylindrical pin (with appropriate dimensional tolerance to allow rotation of the cylindrical pin inside the channels), but also other embodiments in which the height of the retaining elements from the first wall of the frame is greater than the diameter of the cylindrical pin and lower than 150% of the diameter of the cylindrical pin.

In some embodiments, the first connecting portion is a straight extension of the first wall of the first lid. Accordingly, the first connecting portion lies on the planar surface of the first wall of the first lid. In these embodiments, when the first lid is in the closed position, the first connecting portion is parallel to the first wall of the frame, and when the first lid is in an open position, the first connecting portion extends away from the first wall of the first lid along a direction that intersects the first wall of the frame.

In some embodiments, the cylindrical pin is a straight extension of the first wall of the first lid. Accordingly, the cylindrical pin lies on the planar surface of the first wall of the first lid. In these embodiments, when the first lid is in the closed position, the cylindrical pin is parallel to the first wall of the frame, and when the first lid is in an open position, the cylindrical pin extends away from the first wall of the first lid along a direction that intersects the first wall of the frame.

In some embodiments, the at least one first mounting element is a straight extension of the first wall of the first lid. Accordingly, the at least one first mounting element lies on the planar surface of the first wall of the first lid. In these embodiments, when the first lid is in the closed position, the at least one first mounting element is parallel to the first wall of the frame, and when the first lid is in an open position, the at least one first mounting element extends away from the first wall of the first lid along a direction that intersects the first wall of the frame.

In some embodiments, the end portion of the first connecting portion of the first lid has a thickness lower than a thickness of the remaining portion of the first connecting portion.

In some embodiments, the remaining portion of the first connecting portion of the first lid has a thickness equal to a thickness of the first wall of the first lid.

In some embodiments, the diameter of the cylindrical pin is equal to the thickness of the remaining portion of the first connecting portion of the first lid.

Each of the features discussed above contributes to obtain a very compact hinge assembly.

In some embodiments, each of the channels has an inner surface that is spaced apart from the reference axis of a distance equal to half the diameter of the cylindrical pin (with appropriate dimensional tolerance to allow rotation of the cylindrical pin inside the channels). It is thus possible to provide a rotatable coupling with no play between cylindrical pin and channels.

In some embodiments, each channel has a semi-cylindrical inner surface, due to provision of the respective longitudinal opening. Accordingly, the distance between the inner surface of the channel and the reference axis is measured along a direction that intersects the reference axis and is perpendicular to a tangent of the inner surface of the channel.

In some embodiments, the first connecting portion comprises a first shaped hole at each of the at least two first retaining elements, said first shaped hole having a longitudinal dimension greater than a longitudinal dimension of each of the at least two first retaining elements and a transversal dimension greater than a transversal dimension of each of the at least two first retaining elements. In this way an undesired interference between the first lid and the first retaining elements during the opening movement of the first lid is avoided.

In some embodiments, the cable enclosure comprises a plurality of first hinge assemblies aligned to each other along said first longitudinal axis. In this case a more effective and functional rotatable coupling between the first lid and the frame is obtained due to the fact that the coupling between the first lid and the frame occurs at different parts of both the first wall of the frame and the first wall of the first lid.

In some embodiments, the first hinge assemblies are evenly spaced apart from each other.

In some embodiments, all the first hinge assemblies are identical to each other.

In other embodiments, some first hinge assemblies are slightly different from other hinge assemblies.

For example, in the embodiments where the first wall of the frame and the first wall of the first lid are vertical, the hinge assemblies provided in the upper part of the first wall of the frame and in the upper part of the first wall of the first lid are such the height of the first retaining elements from the first wall of the frame is equal to the diameter of the cylindrical pin, while the hinge assemblies provided in the lower part of the first wall of the frame and in the lower part of the first wall of the first lid are such the height of the first retaining elements from the first wall of the frame is greater than the diameter of the cylindrical pin. This latter arrangement can be foreseen for example when the free space between cable enclosure and external box is greater at the lower part of the external box and smaller at the upper part of the external box, like for example in embodiments discussed below wherein the external box has a frusto-pyramidal shape and the frame of the cable enclosure has a U-shape with the two arms of the U parallel to each other.

In some embodiments, the first wall of the first lid comprises a recessed portion between two consecutive first hinge assemblies. This recessed portion is configured to at least partially house retaining elements that can be used to lock at the fist wall of the frame a possible second lid mounted on a second wall opposite to the first wall of the frame, as for example in some embodiments discussed below and when the first wall of the frame extends along a vertical direction.

In some embodiments, the frame comprises a second wall opposite to the first wall of the frame.

In some embodiments, the second wall of the frame extends along a vertical direction.

In some embodiments, the second wall of the frame is parallel to the first wall of the frame.

In some embodiments, the second wall of the frame has a length equal to the length of the first wall of the frame.

In some embodiments, the frame comprises a third wall that connects the first wall of the frame to the second wall of the frame.

In some embodiments, the third wall of the frame is perpendicular to the first wall of the frame and to the second wall of the frame.

In some embodiments, the third wall of the frame extends above the first wall of the frame and to the second wall of the frame. In such embodiments, the third wall of the frame is a top wall of the frame.

In some embodiments, the third wall of the frame is shorter than the first wall of the frame and the second wall of the frame.

In some embodiments, the frame is configured to support or house the cable connections.

In some embodiments, the frame delimits a connection space configured to support at least part of the cable connections.

In some embodiments, the connection space is defined by a hollow space delimited by the first wall of the frame and the second wall of the frame.

In the embodiments where the frame has the third wall, the hollow space is further delimited by the third wall of the frame.

In other embodiments, the connection space is defined on a plate.

The plate can be perforated to properly support the cable connections.

The plate can define at least part of the frame or be associated with the frame.

In some embodiments, at least two second retaining elements identical to the at least two first retaining elements project outwardly from an outer surface of the second wall of the frame.

In some embodiments, each of the at least two second retaining elements is aligned to a respective retaining element of the at least two first retaining elements along a transversal direction perpendicular to the first longitudinal axis. Accordingly, the arrangement of the second retaining elements on the second wall of the frame is identical to that of the first retaining elements on the first wall of the frame.

In some embodiments, the second wall of the frame is substantially identical to the first wall of the frame.

In some embodiments, the first lid comprises a second wall.

In some embodiments, the second wall of the first lid is opposite to the first wall of the first lid.

In some embodiments, the second wall of the first lid is parallel to the first wall of the first lid.

In some embodiments, the first wall of the first lid has, at least at the free end thereof, a planar surface.

In some embodiments, the second wall of the first lid extends along a vertical direction.

In some embodiments, the second wall of the first lid has a length equal to the length of the first wall of the first lid.

In some embodiments, the first lid comprises a front wall that connects the first wall of the first lid to the second wall of the first lid.

In the embodiments where the first wall of the first lid is a top wall of the first lid, the second wall of the first lid is a vertical wall perpendicular to the top wall of the first lid.

In some embodiments, the first wall of the first lid and the second wall of the first lid are perpendicular to the front wall of the first lid.

In some embodiments, the top wall of the first lid is connected to the front wall of the first lid and connects the first wall of the first lid to the second wall of the first lid.

In some embodiments, the first lid comprises a bottom wall connected to the front wall of the first lid and connecting the first wall of the first lid to the second wall of the first lid.

In some embodiments, the top wall of the first lid and the bottom wall of the first lid are parallel to each other.

In some embodiments, the top wall of the first lid and the bottom wall of the first lid are perpendicular to the front wall of the first lid.

In some embodiments, the top wall of the first lid and the bottom wall of the first lid are perpendicular to the first wall of the first lid and to the second wall of the first lid.

In some embodiments, the bottom wall of the first lid has a length equal to the length of the top wall of the first lid.

Accordingly, in some embodiments the first lid has a parallelepipedal shape.

In other embodiments, the first lid can have different shapes. For example, the first lid can have a hexagonal or octagonal prismatic cross-section or a circular cross section or an elliptical cross section. In the latter cases the first, second and third walls of the first lid are different portions of a single wall.

In some embodiments, the first lid comprises a cavity delimited by the first wall of the first lid, the second wall of the first lid, the top wall of the first lid, the bottom wall of the first lid and the front wall of the first lid.

The cavity is arranged in front of the connection space of the frame when the first lid is in the closed position. This cavity can be used to house at least part of the cable connections.

In some embodiments, the cable enclosure comprises at least one first locking member that releasably locks the first lid to the frame at the second wall of the first lid and the second wall of the frame. The at least one locking member allows the first lid to stably remain in the closed position when there is no need to access to the cable connections provided in the cable enclosure.

In some embodiments, the at least one first locking member is a straight extension of the second wall of the first lid. Accordingly, the at least one first locking member lies on the planar surface of the second wall of the first lid so that when the first lid is in the closed position, the at least one first locking member is parallel to the second wall of the frame.

In some embodiments, the at least one first locking member comprises said at least two second retaining elements and at least one first locking element projecting outwardly from the second wall of the first lid and configured to be coupled to said at least two second retaining elements.

In some embodiments, the abovementioned coupling is a snap coupling.

In some embodiments, the second wall of the first lid differs from the first wall of the first lid only in that in the first wall of the first lid the at least one first mounting element is provided while in the second wall of the first lid the at least one first locking element is provided. This occurs when both the first wall of the first lid and the second wall of the first lid extend along respective vertical directions.

In some embodiments, the at least one first mounting element is a straight extension of the second wall of the first lid. Accordingly, the at least one first mounting element lies on the planar surface of the second wall of the first lid so that, when the first lid is in the closed position, the at least one first mounting element is parallel to the second wall of the frame.

In some embodiments, the at least one first mounting element projects from a free edge of the first wall of the first lid away from the front wall of the first lid.

In some embodiments, the at least one first locking element projects from a free edge of the second wall of the first lid away from the front wall of the first lid.

In the embodiments where the first wall of the first lid is the top wall of the first lid and the opposite second walls of the first lid extend along respective vertical directions, the at least one first locking element projects from a free edge of at least one of the opposite second walls of the first lid away from the front wall of the first lid.

Accordingly, the frame comprises first retaining elements at the first wall of the frame that cooperate with a respective mounting element provided at the first wall of the first lid and second retaining elements at the second wall of the frame that are aligned to the abovementioned first retaining elements along a transversal direction perpendicular to the first longitudinal direction and that cooperate with the at least one first locking element provided at the second wall of the first lid. Thus, any couple of retaining elements can be a component of a hinge assembly or a component of a locking member.

In some embodiments, the least one first locking element has a thickness equal to a thickness of the second wall of the first lid. Accordingly, the space occupied by the locking member at the side of the frame is reduced to the minimum.

In some embodiments, the locking member comprises at least two first locking elements identical to each other. In this way the design and manufacturing of the first lid is particularly simple.

In some of these embodiments, each of the least two first locking elements comprises one or two opposite protrusions configured to be housed in a respective channel of the at least two second retaining elements.

The housing of the protrusions in the channels formed in the second retaining elements is obtained through a snap coupling between protrusions and second retaining elements.

In other embodiments, the locking member comprises a single first locking element. In this way the opening and closing operations of the first lid are facilitated.

In some of these other embodiments, the single locking element is configured to be housed between two second retaining elements that are aligned to each other.

The housing of the single locking element between the two second retaining elements is obtained through a snap coupling between the single locking element and the abovementioned two second retaining elements.

In some embodiments, the at least one first locking member comprises a second connecting portion that connects the at least one first locking element to the second wall of the first lid.

In some embodiments, the second connecting portion comprises a second shaped hole at at least one of the at least two second retaining elements, said second shaped hole having a longitudinal dimension greater than a longitudinal dimension of the at least one of the at least two second retaining elements and a transversal dimension greater than a transversal dimension of the at least one of the at least two second retaining elements. In this way an undesired interference between the first lid and the second retaining elements is avoided during the closing movement of the first lid.

In some embodiments, the second connecting portion of the first lid has a thickness equal to a thickness of the second wall of the first lid. Accordingly, the space occupied by the second connecting portion at the side of the frame is reduced to the minimum.

In some embodiments, the at least two first retaining elements comprise at least three retaining elements.

In some embodiments, the at least two second retaining elements comprise at least three retaining elements. This occurs for example when the walls from which the first and second retaining elements project are long, like in the embodiments in which they extend along respective vertical directions.

In such embodiments, at least two of the at least three retaining elements are aligned along a longitudinal direction parallel to the first longitudinal axis and at least one of the at least three retaining elements is staggered with respect to said two retaining elements along said first longitudinal axis.

In some embodiments, the cable enclosure comprises a plurality of first locking members aligned to each other along a longitudinal direction parallel to said first longitudinal axis.

These embodiments correspond to those where the cable enclosure comprises a plurality of first retaining elements aligned to each other.

In some embodiments, the first locking members are evenly spaced apart from each other.

In some embodiments, all the first locking members are identical to each other.

In some embodiments, the second wall of the first lid comprises a recessed portion between two consecutive first locking members. This recessed portion is configured to at least partially house retaining elements that can be used to support a possible second lid mounted on the second wall of the frame, as for example in the embodiments discussed further below, so as to avoid an undesired interference between the second lid and such retaining elements during the opening movement of the second lid.

In some embodiments where the first retaining elements are provided on the first wall of the frame, the cable enclosure further comprises at least two third retaining elements projecting outwardly from an outer surface of the third wall of the frame.

In some embodiments, the least two third retaining elements are identical to the at least two first retaining elements.

In some embodiments, the at least two third retaining elements consist of two retaining elements.

In some embodiments, the frame comprises a plurality of groups of first retaining elements in the first wall of the frame, a plurality of groups of second retaining elements in the second wall of the frame and a plurality of groups of third retaining elements in the third wall of the frame, wherein each group of first retaining elements and each group of second retaining elements has three retaining elements, whereas each group of third retaining elements has two retaining elements.

In some embodiments, the cable enclosure further comprises a second hinge assembly that rotatably connects a second lid to the frame at the second wall of the frame. These embodiments are provided when it is desired to close the opposite faces of the frame by respective lids.

In some embodiments, the second hinge assembly is identical to the first hinge assembly. This feature allows the design and manufacturing of the frame and of the lids to be easy.

In some embodiments, the second hinge assembly comprises said at least two second retaining elements and at least one second mounting element projecting outwardly from a first wall of the second lid.

In some embodiments, the cable enclosure comprises a plurality of second hinge assemblies aligned to each other along a longitudinal direction parallel to said first longitudinal axis.

In some embodiments, the first wall of the second lid comprises a recessed portion between two consecutive second hinge assemblies.

In some embodiments, the second lid comprises a second wall parallel to the first wall of the second lid and a front wall that connects the first wall of the second lid to the second wall of the first lid.

In some embodiments, the cable enclosure comprises at least one second locking member that releasably locks the second lid to the frame at the second wall of the second lid and the first wall of the frame.

In some embodiment, the at least one second locking member is identical to the at least one first locking member.

In some embodiments, the at least one second locking member comprises said at least two first retaining elements and at least one second locking element projecting outwardly from the second wall of the second lid and configured to be snap coupled to said at least two first retaining elements.

In some embodiments, the cable enclosure comprises a plurality of second locking members aligned to each other along a longitudinal direction parallel to said first longitudinal axis.

In some embodiments, the second wall of the second lid comprises a recessed portion between two consecutive second locking members.

In some embodiments, when the first lid is locked to the frame, each second hinge assembly is arranged between two consecutive first locking members along a direction parallel to the first longitudinal axis.

In some embodiments, when the first lid is locked to the frame, a first locking member is at least partially arranged in a respective recessed portion of the first wall of the second lid.

In some embodiments, when the second lid is locked to the frame, each second locking member is arranged between two consecutive first hinge assemblies along a direction parallel to the first longitudinal axis.

In some embodiments, when the second lid is locked to the frame, a second locking member is at least partially arranged in a respective recessed portion of the first wall of the first lid.

In some embodiments, the cable enclosure is made of a moulded plastic material.

In some embodiments, the at least two first retaining elements are made in a single piece with the first wall of the frame and the at least one first mounting element is made in a single piece with the first wall of the first lid.

In some embodiments, the first wall of the frame is made in a single piece with a remaining part of the frame.

In some embodiments, the first wall of the first lid is made in a single piece with a remaining part of the first lid.

In a second aspect thereof, the present disclosure relates to a cable protection system comprising an external box and a cable enclosure according to the first aspect of the present disclosure, the cable enclosure being arranged within the external box.

The external box prevents people other than the authorized technicians to have access to the cable enclosure.

In some embodiments, the external box has a frusto-pyramidal shape.

Accordingly, the free space between frame and external box at the bottom portion of the frame and of the external box is greater than that at the top portion of the frame and of the external box, so that hinge assemblies that are a little bit bulkier can be used at the bottom portion of the frame and hinge assemblies that are less bulky can be used at the top portion of the frame. For example, hinge assemblies wherein the retaining elements have a height from the first wall of the frame equal to the diameter of the cylindrical pin can be used at the top portion of the frame and hinge assemblies wherein the retaining elements have a height from the first wall of the frame slightly greater than the diameter of the cylindrical pin can be used at the bottom portion of the frame.

Different embodiments of the present disclosure can be combined together. Accordingly, the present disclosure encompasses also an embodiment of the cable enclosure including more than one lid on the same side of the frame, like for example a lid, as above disclosed, having the longitudinal axis extending along a horizontal direction and a lid having the longitudinal axis extending along a vertical direction. In a further embodiment, the cable enclosure includes a single lid on just one side of the frame, this single lid having the longitudinal axis extending along a horizontal direction or along a vertical direction. In a further embodiment, the cable enclosure includes identical lids on the opposite sides of the frame.

### Brief description of the drawings

A more detailed description will be made hereinafter with reference to the accompanying drawings, in which only some of the embodiments of the present disclosure are shown.

Drawings illustrating the embodiments are not to scale representations.

For the purpose of the present description and of the appended claims, term "a" or "an" is employed to describe elements and components of the present disclosure. This is done merely for convenience and to provide a general sense of the present disclosure. This description should be read to include one or at least one and the singular also includes the plural unless it is obvious that it is meant otherwise.
- Figure 1 is a schematic and partially sectioned elevation view of a first embodiment of a cable protection system according to the present disclosure, the protection system including a cable enclosure;
- Figure 2 is a schematic and partially sectioned elevation view of the cable protection system of Figure 1 wherein the cable enclosure is shown without a component thereof, i.e. a first lid;
- Figure 3 is a schematic perspective view of a first embodiment of the cable enclosure included in the cable protection system of Figure 1 wherein the cable enclosure is in a different configuration from that of Figure 1;
- Figure 4 is a schematic perspective view of the cable enclosure of Figure 3 in a different configuration from that of Figure 3;
- Figure 5 is an enlarged schematic perspective view of components of the cable enclosure of Figure 4, these components being indicated with "V" in Figure 4;
- Figure 6 is a schematic perspective view of the cable enclosure of Figure 4 in a different configuration from that of Figure 4;
- Figure 7 is an enlarged schematic perspective view of components of the cable enclosure of Figure 6, these components being indicated with "VII" in Figure 6;
- Figure 8 is an enlarged schematic perspective view of other components of the cable enclosure of Figure 6, these other components being indicated with "VIII" in Figure 6;
- Figure 9 is a schematic elevation view of a first embodiment of the components of Figure 8;
- Figure 10 is a schematic elevation view of a second embodiment of the components of Figure 8;
- Figure 11 is an enlarged schematic perspective view of components of the cable enclosure of Figure 6, these components being indicated with "XI" in Figure 6;
- Figure 12 is an enlarged schematic plan view of a detail of Figure 11;
- Figure 13 is a schematic perspective view of the cable enclosure of Figure 4 viewed from a point of view opposite to that of Figure 4;
- Figure 14 is an enlarged schematic perspective view of components of the cable enclosure of Figure 13, these components being indicated with "XIV" in Figure 13;
- Figure 15 is a schematic perspective view of the components of Figure 14, in a different configuration from that of Figure 14;
- Figure 16 is a schematic perspective view of a second embodiment of a cable enclosure according to the present disclosure;
- Figure 17 is a schematic perspective view of the cable enclosure of Figure 16, in a different configuration from that of Figure 16;
- Figure 17A is an enlarged schematic perspective view of components of the cable enclosure of Figure 17, these component being a variant of those shown in Figures 14 and 15;
- Figure 17B is a schematic perspective view of the components of Figure 17A, in a different configuration from that of Figure 17A;
- Figure 18 is a schematic perspective view of a third embodiment of a cable enclosure according to the present disclosure;
- Figure 19 is an enlarged schematic perspective view of components of the cable enclosure of Figure 18, these components being indicated with "XIX" in Figure 18;
- Figure 20 is a schematic perspective view of the components of Figure 19 in a different configuration from that of Figure 19;
- Figure 21 is a schematic perspective view of the cable enclosure of Figure 18 in a different configuration from that of Figure 18;
- Figure 22 is an enlarged schematic perspective view of components of the cable enclosure of Figure 21, these components being indicated with "XXII" in Figure 21;
- Figure 23 is a schematic perspective view of the components of Figure 22 in a different configuration from that of Figure 22.

### Detailed description

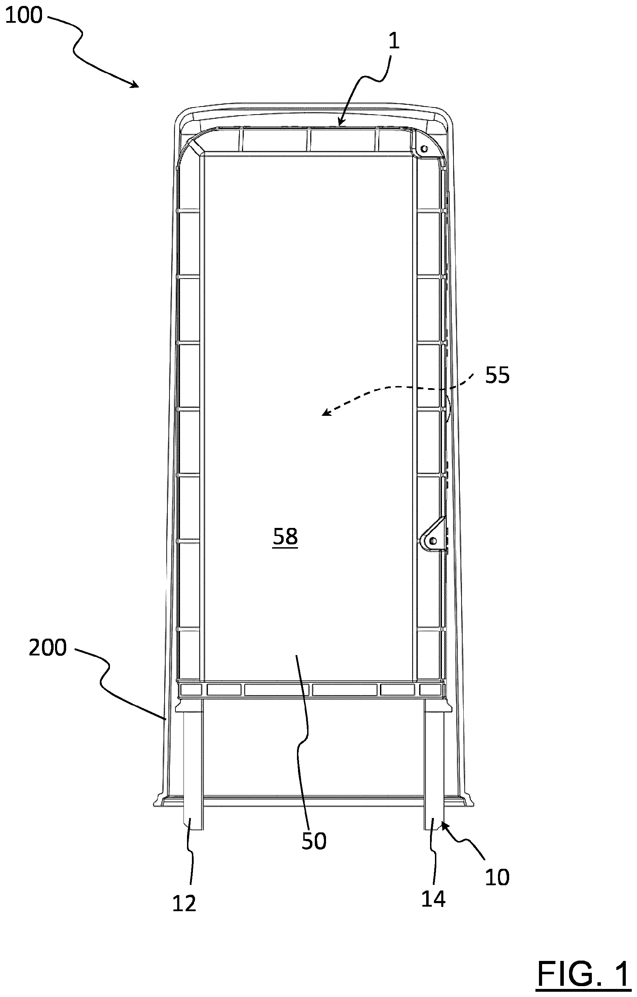

A cable enclosure according to a first embodiment of the present disclosure is indicated with reference number 1 in Figures 1-4, 6, 13.

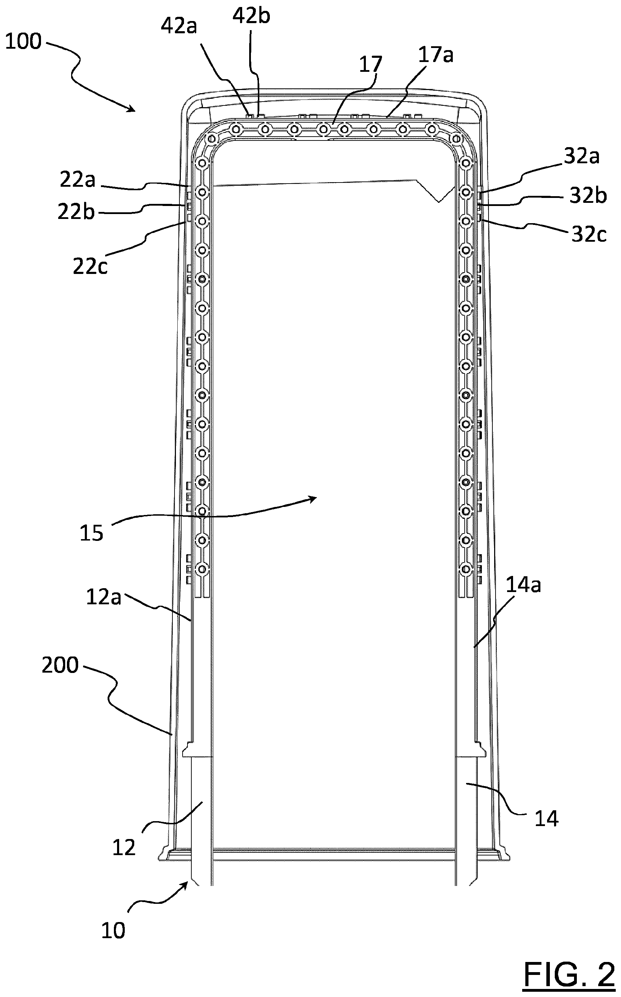

The cable enclosure 1 is arranged within an external box 200 to form with such an external box 200 a cable protection system 100 according to the first embodiment of the present disclosure (Figures 1 and 2).

The cable enclosure 1 comprises a frame 10 and a first lid 50 hinged to the frame 10.

The cable enclosure 1 has a substantially parallelepipedal shape and the external box 200 has a substantially frusto-pyramidal shape.

The frame 10 is made in a single piece.

The first lid 50 is made in a single piece.

Both the frame 10 and the first lid 50 are made of moulded plastic material.

The frame 10 has a U-shape with the two arms of the U parallel to each other and the base of the U arranged above the arms and extending along a direction perpendicular to that of the two arms.

The frame 10 comprises a first wall 12 (i.e. a first arm of the U), a second wall 14 opposite to the first wall 12 (i.e. a second arm of the U) and a third wall 17 (i.e. the base of the U) connecting the first wall 12 to the second wall 14.

The first and second walls 12, 14 are parallel and extend along a vertical direction, whereas the third wall 17 extends along a horizontal direction and is perpendicular to the first and second walls 12, 14. The third wall 17 is a top wall of the frame 10.

A connection space 15 configured to at least partially house the cable connections is defined between the first and second walls 12, 14 and under the third wall 17.

In the embodiments shown in the attached figures, the connection space 15 is an hollow space delimited by the first, second and third walls 12, 14, 17.

In other embodiments not shown, the connection space 15 is defined on a plate, for example a perforated plate, that is housed within the frame 10 or that defines itself at least part of the frame 10. In the latter case the first, second and third walls 12, 14, 17 are walls of the plate.

The first, second and third walls 12, 14, 17 have respective outer surfaces 12a, 14a, 17a.

The second wall 14 has a length equal to the length of the first wall 12. The third wall 17 has a length shorter than that of the first wall 12 and second wall 14.

A first longitudinal axis A1 which extends along a vertical direction is defined on the first wall 12 of the frame 10.

A first wall 52 of the first lid 50 is rotatably connected to the first wall 12 of the frame 10 by a plurality of first hinge assemblies 20.

The first lid 50 has a substantially parallelepipedal shape, wherein the first wall 52 extends along a vertical direction and defines a first lateral wall of the first lid 50.

The first wall 52 has, at least at the free end thereof, a planar surface.

The first lid 50 also comprises a second wall 54 which is parallel and opposite to the first wall 52. Thus, the second wall 54 extends along a vertical direction as well. The second wall 54 has a length equal to the length of the first wall 52 and is substantially identical to the first wall 52.

The first lid 50 further comprises a front wall 58 that connects the first wall 52 to the second wall 54. The front wall 58 is perpendicular to the first wall 52 and the second wall 54.

The first lid 50 also comprises a top wall 57 and a bottom wall 59. The top wall 57 and the bottom wall 59 are connected to the front wall 58. Furthermore, the top wall 57 and the bottom wall 59 connect the first wall 52 to the second wall 54. The bottom wall 59 has a length equal to the length of the top wall 57.

The top wall 57 and the bottom wall 59 are parallel to each other and perpendicular to the front wall 58. The top wall 57 and the bottom wall 59 are perpendicular to the first wall 52 and to the second wall 54.

The first lid 50 comprises a cavity 55 delimited by the first wall 52, the second wall 54, the top wall 57, the bottom wall 59 and the front wall 58.

The cavity 55 is arranged in front of the connection space 15 of the frame 10 when the first lid 50 is in a closed position, i.e. is in the position shown in Figures 1, 4 and 13. The cavity 55 is configured to house at least part of the cable connections.

In the not-limiting example of Figures 1, 3, 4, 6, 13, the length of the first wall 52 of the first lid 50 along the first longitudinal axis A1 is less than a length of the first wall 12 of the frame 10 along the first longitudinal axis A1.

The plurality of first hinge assemblies 20 are aligned to each other along the first longitudinal axis A1.

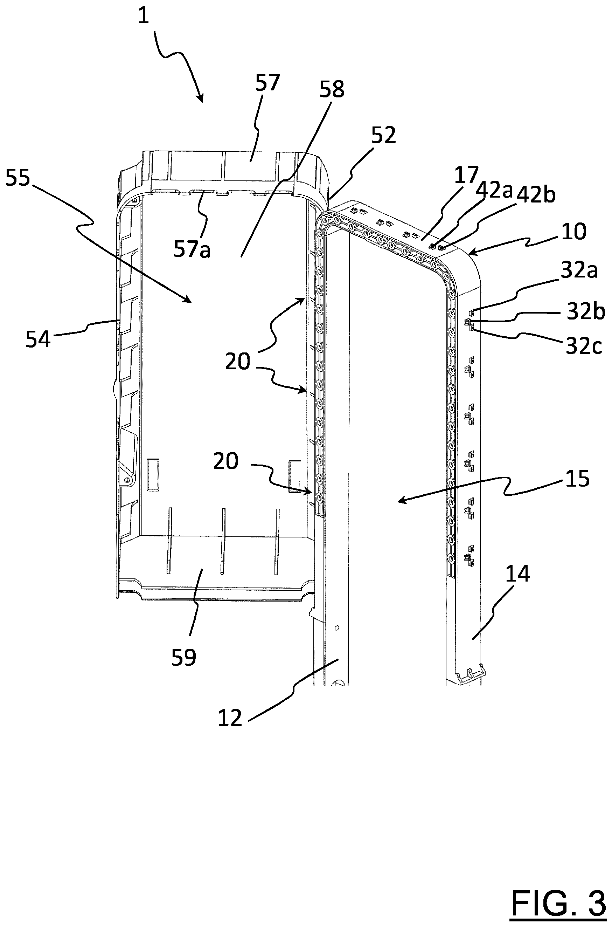

In the not-limiting example of Figures 3, 4 and 6, three first hinge assemblies 20 are provided in the first wall 12 of the frame 10. The first hinge assemblies 20 are evenly spaced apart from each other.

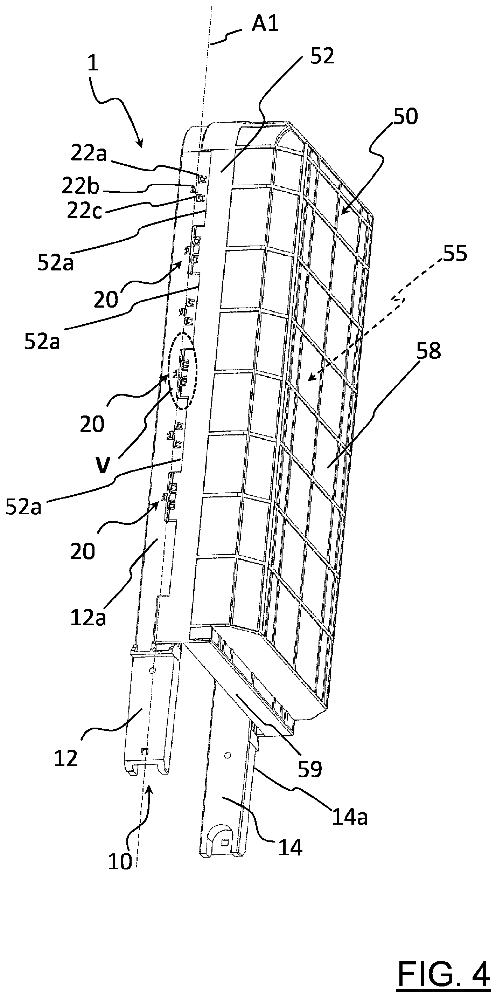

As shown in Figures 4, 5, 11 and 12, each first hinge assembly 20 comprises three first retaining elements 22a, 22b, 22c projecting outwardly from the outer surface 12a of the first wall 12 of the frame 10 and a first mounting element 27 projecting outwardly from the first wall 52 of the first lid 50.

The first mounting element 27 is a straight extension of the first wall 52. Accordingly, the first mounting element 27 lies on the planar surface of the first wall 52 and extends along a direction that, when the first lid 50 is in the closed position, is parallel to the first wall 12 of the frame 10, and when the first lid 50 is in an open position, intersects the first wall 12 of the frame 10.

The first retaining elements 22a, 22b, 22c are made in a single piece with the first wall 12 of the frame 10.

Each first mounting element 27 projects from a free edge of the first wall 52 of the first lid 50 away from the front wall 58 of the first lid 50.

The first mounting element 27 is made in a single piece with the first wall 52 of the first lid 50.

The three first retaining elements 22a, 22b, 22c are identical to each other and are arranged in staggered positions on opposite sides with respect to the first longitudinal axis A1. In particular, two first retaining elements 22a, 22c are aligned along a longitudinal direction parallel to the first longitudinal axis A1 and the first retaining element 22b is staggered with respect to the two first retaining elements 22a, 22c along the first longitudinal axis A1.

The first retaining element 22b is interposed between the first retaining elements 22a and 22c along the first longitudinal axis A1.

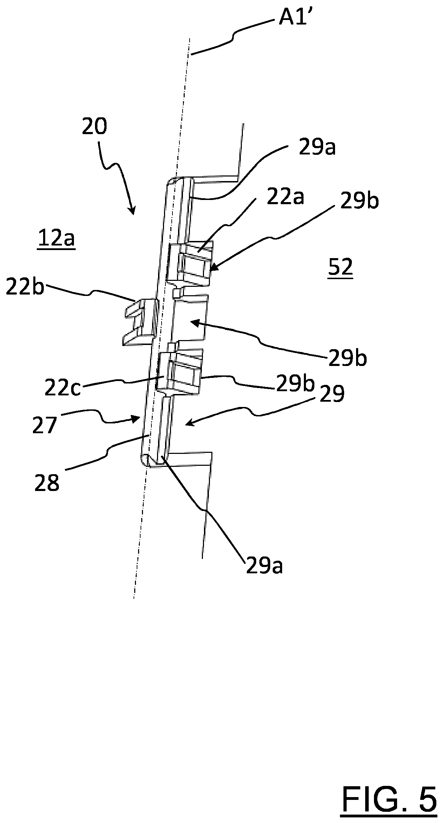

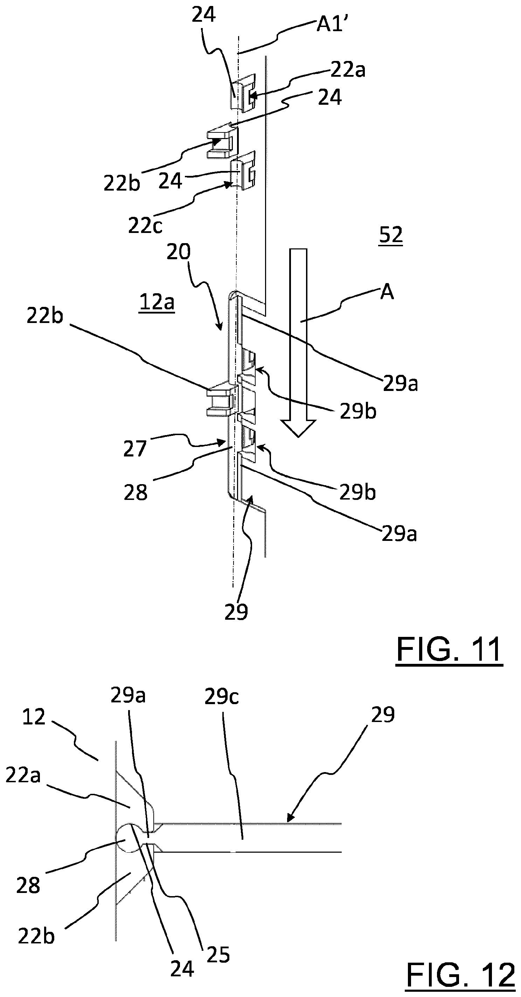

Each element of the three first retaining elements 22a, 22b, 22c defines a respective channel 24 extending along a reference axis A1' parallel to the first longitudinal axis A1. Reference axis A1' is shown in figures 5 and 7-11. The first retaining elements 22a and 22c are oriented in the same way, that is with a respective semi-circular surface 24a facing the channel 24 from one side, while the first retaining element 22b is oriented in the opposite way, that is with a respective semi-circular surface 24a facing the channel 24 from an opposite side. This can also be seen in Figure 11, wherein the first retaining elements 22a and 22c are on the right of the reference axis A1' and the respective channels 24 are oriented towards the left, while the first retaining element 22b is on the left of the reference axis A1' and the respective channel 24 is oriented towards the right.

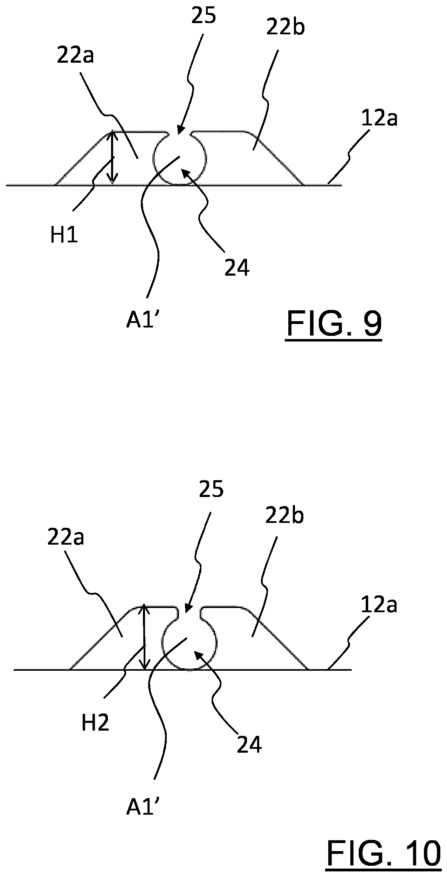

Figure 9 and 10 show that in a projected view of the first retaining elements 22a and 22b a channel 24 is defined with a longitudinal opening 25 facing the reference axis A1'.

The first mounting element 27 comprises a cylindrical pin 28 and a first connecting portion 29 that connects the cylindrical pin 28 to the first wall 52.

Both the cylindrical pin 28 and the first connection portion 29 lie on the planar surface of the first wall 52, so that they are a straight extension of the first wall 52.

The cylindrical pin 28 has a predetermined diameter and is rotatably housed in the channels 24.

The three first retaining elements 22a, 22b, 22c have a height from the first wall 12 substantially equal to the diameter of the cylindrical pin 28.

Each of the channels 24 has an inner surface that is spaced apart from the reference axis A1' of a distance substantially equal to half the diameter of the cylindrical pin 28 (with appropriate dimensional tolerance to allow rotation of the cylindrical pin 28 inside the channels 24).

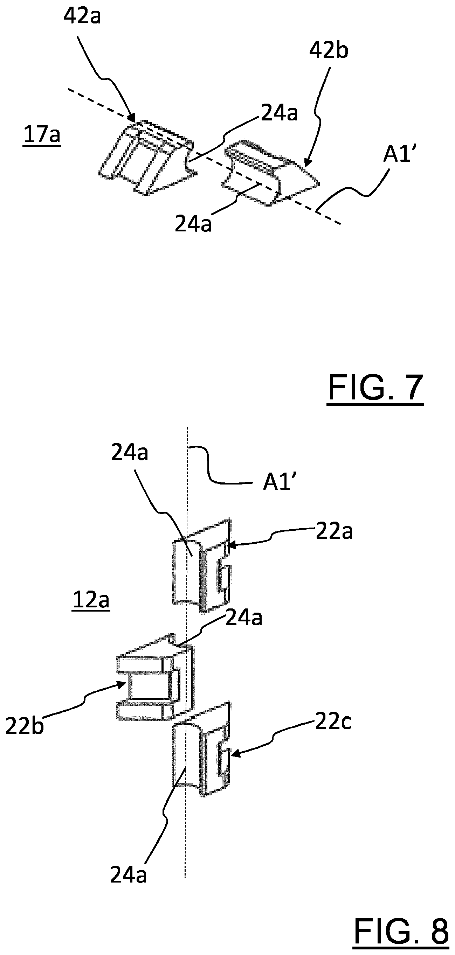

As shown in Figure 8, due to the provision of the respective longitudinal opening 25 each channel 24 has a semi-cylindrical inner surface 24a formed by the first retaining elements 22a, 22b, 22c. In this case the distance between the inner surface of the channel 24 and the reference axis A1' is measured along a direction that intersects the reference axis A1' and is perpendicular to a tangent of the semi-cylindrical inner surface of the channel 24.

The first connecting portion 29 comprises an end portion 29a adjacent to the cylindrical pin 28 and having a thickness lower than a thickness of the remaining portion 29c of the first connecting portion 29 and lower than the diameter of the cylindrical pin 28.

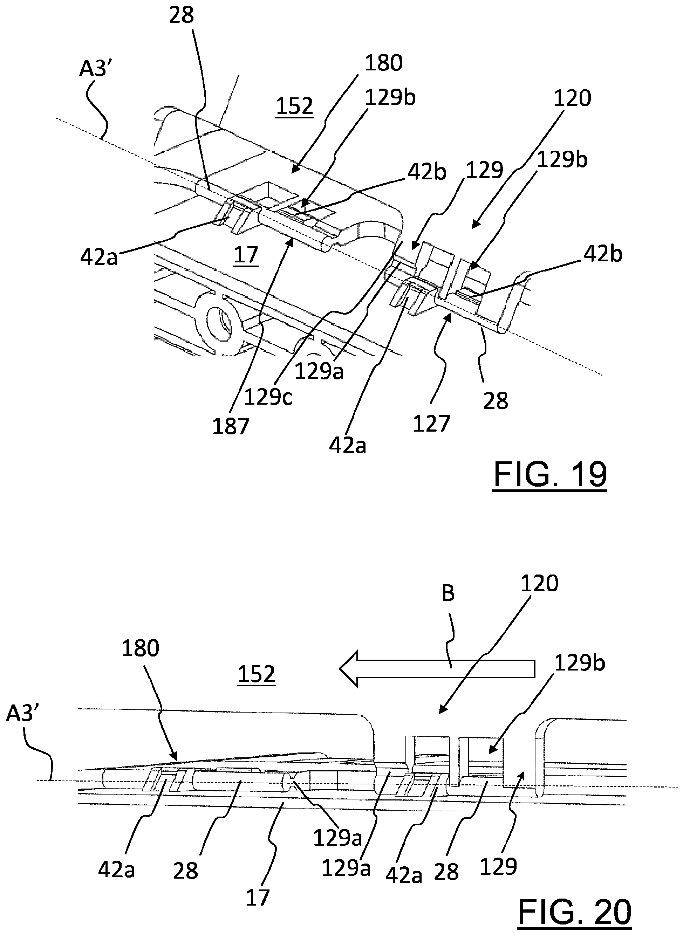

The end portion 29a extends along the first longitudinal axis A1 for the whole length of first connecting portion 29, as shown in figures 5 and 11. However, in different embodiments not shown the end portion 29a can extend along the first longitudinal axis A1 for only part of the length of the first connecting portion 29, like for example the end portion 129a shown in figures 19 and 20 and described below.

The remaining portion 29c of the first connecting portion 29 of the first lid 50 can have a thickness equal to a thickness of the first wall 52 of the first lid 50.

In the not-limiting example of Figure 12, the diameter of the cylindrical pin 28 is substantially equal to the thickness of the remaining portion 29c of the first connecting portion 29 of the first lid 50.

The end portion 29a is configured to slide into the longitudinal opening 25 of each of the channels 24 so as to house the cylindrical pin 28 inside the channels 24 upon a sliding movement of the first lid 50 with respect to the frame 10 along the reference axis A1' (see arrow A in Figure 11). As shown in Figures 11 and 12, the sliding movement occurs when the first lid 50 is at a predetermined angular position with respect to the frame 10, that is when the first wall 52 of the first lid 50 is at a predetermined opening angle with respect to the first wall 12 of the frame 10. In the not-limiting example of Figures 11 and 12, this predetermined opening angle is equal to 90°.

The first connecting portion 29 further comprises a first shaped hole 29b at each of the three first retaining elements 22a, 22b, 22c.

The first shaped hole 29b has a longitudinal dimension greater than a longitudinal dimension of each of the three first retaining elements 22a, 22b, 22c and a transversal dimension greater than a transversal dimension of each of the three first retaining elements 22a, 22b, 22c.

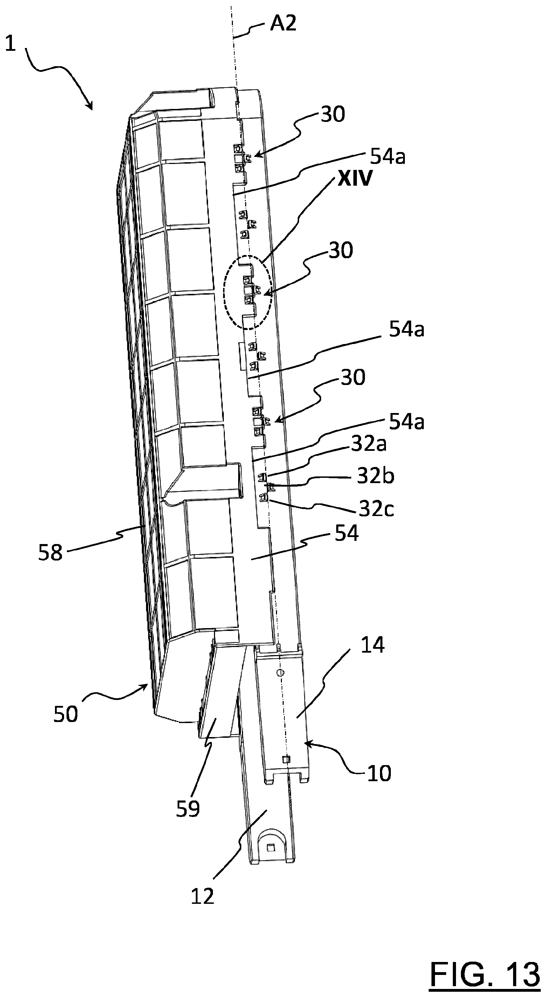

As shown in Figures 13-15, the cable enclosure 1 further comprises a plurality of first locking members 30 aligned to each other along a second longitudinal axis A2 parallel to the first longitudinal axis A1, i.e. extending along a vertical direction. The first locking members 30 releasably lock the first lid 50 to the frame 10 at the second wall 54 of the first lid 50 and the second wall 14 of the frame 10.

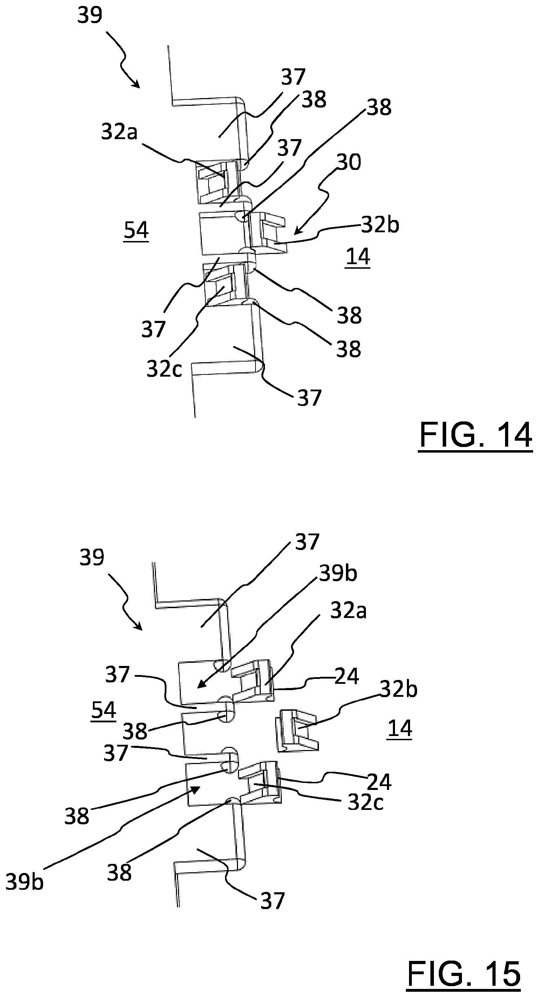

Figure 14 shows a configuration of the first locking member 30 wherein the second wall 54 of the first lid 50 is locked to the second wall 14 of frame 10, while Figure 15 shows a different configuration of the first locking member 30 wherein the second wall 54 of the first lid 50 is unlocked from the second wall 14 of the frame 10.

In the not-limiting example of Figure 13, three first locking members 30 are provided on the second wall 14 of the frame 10. The first locking members 30 are evenly spaced apart from each other along the second longitudinal axis A2.

In an embodiment not shown, only two first locking members 30 can be provided on the second wall 14 of the frame 10, one in the upper part of the second wall 14 and another in the lower part of the second wall 14. In this case the opening of the first lid 50 can more easily occur by pulling the second wall 54 of the first lid 50 away from the second wall 14 of the frame 10 with two hands, one hand being positioned at the upper part of the second wall 54 of the first lid 50 and the other hand being positioned at the lower part of the second wall 54 of the first lid 50.

As shown in Figures 14 and 15, each first locking member 30 comprises three second retaining elements 32a, 32b, 32c projecting outwardly from the outer surface 14a of the second wall 14 of the frame 10 and four first locking elements 37 projecting outwardly from a free edge of the second wall 54 of the first lid 50 away from the front wall 58.

Each first locking element 37 is a straight extension of the second wall 54 of the first lid 50. Accordingly, each first locking element 37 lies on the planar surface of the second wall 52 of the first lid 50 and extends along a direction that, when the first lid 50 is in the closed position, is parallel to the second wall 14 of the frame 10.

The three second retaining elements 32a, 32b, 32c are identical to the three first retaining elements 22a, 22b, 22c, respectively.

The second retaining elements 32a, 32b, 32c are made in a single piece with the second wall 14 of the frame 10.

The second retaining elements 32a, 32b, 32c are aligned to the abovementioned first retaining elements 22a, 22b, 22c along a transversal direction perpendicular to the first longitudinal direction A1.

The first locking elements 37 are made in a single piece with the second wall 54 of the first lid 50.

In the not-limiting example of Figures 14 and 15, the first locking elements 37 have a thickness equal to a thickness of the second wall 54 of the first lid 50.

Each of the first locking elements 37 comprises one or two opposite protrusions 38 configured to be housed through snap coupling in a respective channel 24 of the three second retaining elements 32a, 32b, 32c.

Thus, the frame 10 comprises first retaining elements 22a, 22b, 22c at the first wall 12 of the frame 10 that cooperate with a respective mounting element 27 provided at the first wall 52 of the first lid 50 to allow opening and closure of the first lid 50 with respect to the frame 10. The frame 10 further comprises second retaining elements 32a, 32b, 32c at the second wall 14 of the frame 10 that cooperate with the first locking elements 37 provided at the second wall 54 of the first lid 50 to allow the first lid 50 to be locked to the frame 10 when the first lid 50 is in the closed position. Accordingly, any couple formed of first retaining elements 22a, 22b, 22c and second retaining elements 32a, 32b, 32c defines a component of a first hinge assembly 20 and a component of a first locking member 30 of the cable enclosure 1.

Each first locking member 30 comprises a second connecting portion 39 that connects the first locking elements 37 to the second wall 54 of the first lid 50. In the not-limiting example of Figures 13-15, the second connecting portion 39 of the first lid 50 has a thickness equal to a thickness of the second wall 54 of the first lid 50.

The second connecting portion 39 comprises a second shaped hole 39b at each of the three second retaining elements 32a, 32b, 32c.

The second shaped hole 39b has a longitudinal dimension greater than a longitudinal dimension of each of the three second retaining elements 32a, 32b, 32c and a transversal dimension greater than a transversal dimension of each of the three second retaining elements 32a, 32b, 32c.

The second wall 54 of the first lid 50 differs from the first wall 52 of the first lid 50 only in that in the first wall 52 the first mounting elements 27 are provided while in the second wall 54 the first locking elements 37 are provided.

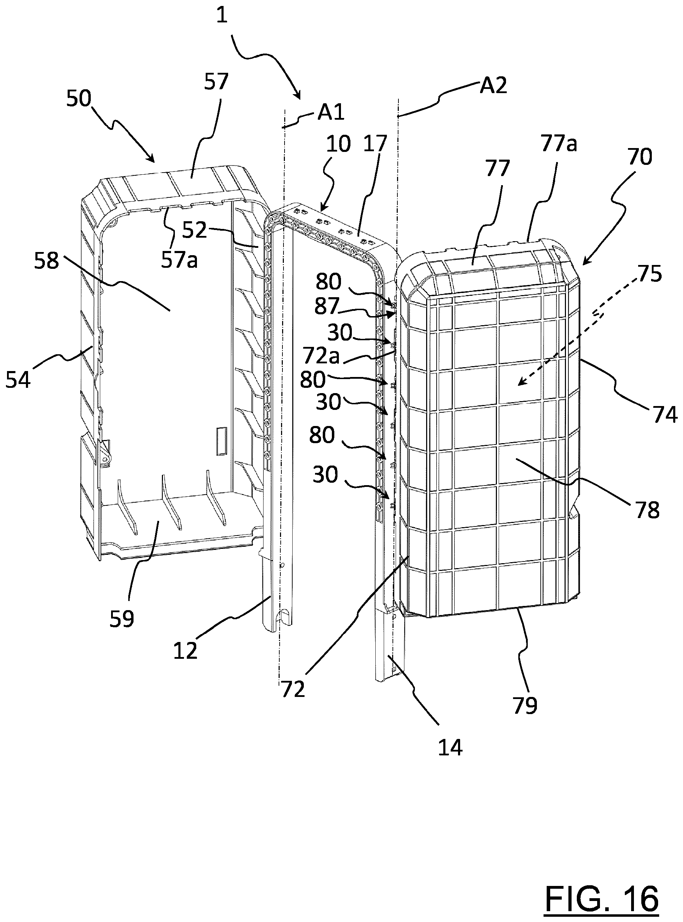

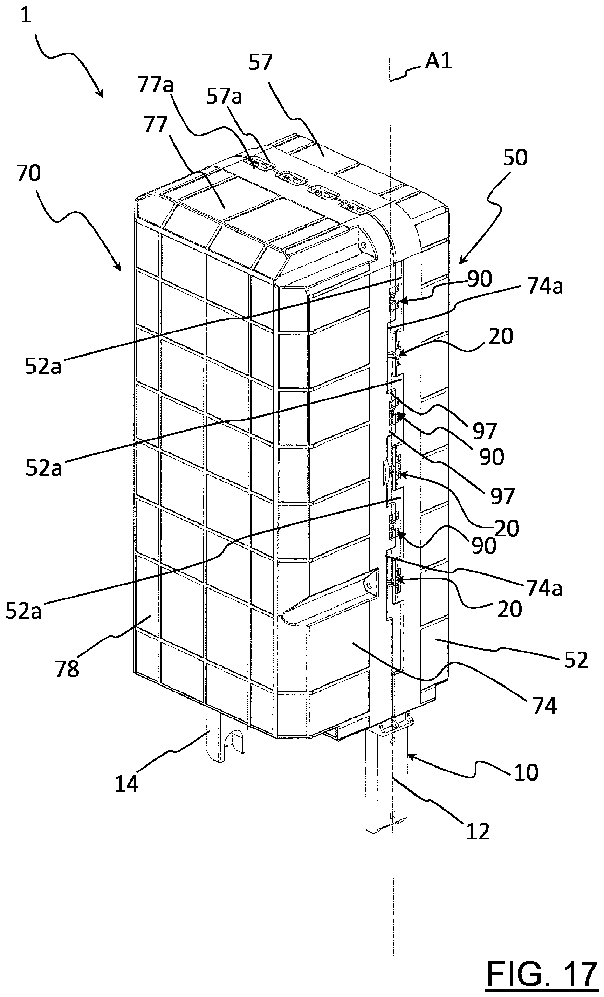

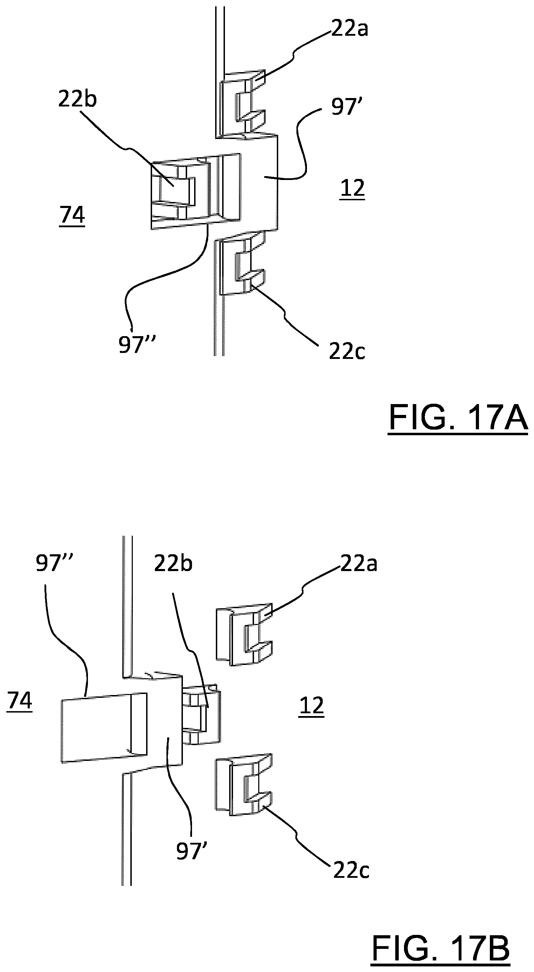

As shown in Figure 4, the first wall 52 of the first lid 50 comprises a recessed portion 52a between two consecutive first hinge assemblies 20. This recessed portion 52a is configured to at least partially house first retaining elements 22a, 22b, 22c used to lock at the fist wall 12 of the frame 10 a second lid mounted on the second wall 14 of the frame 10, as for example in the embodiment discussed further below with respect to figures 16 and 17.

As shown in Figure 13, the second wall 54 of the first lid 50 comprises a recessed portion 54a between two consecutive first locking members 30. This recessed portion 54a is configured to at least partially house second retaining elements 32a, 32b, 32c used to support the abovementioned second lid at the second wall 14 of the frame 10, as for example in the embodiment discussed further below with respect to figures 16 and 17.

In different embodiments not shown, each or at least some of the first locking members 30 can be of the type described below with reference to figures 17A and 17B.

As shown in Figures 3, 6 and 7, third retaining elements 42a, 42b are provided on the third wall 17 of the frame 10. The third retaining elements 42a, 42b project outwardly from the outer surface 17a of the third wall 17 of the frame 10.

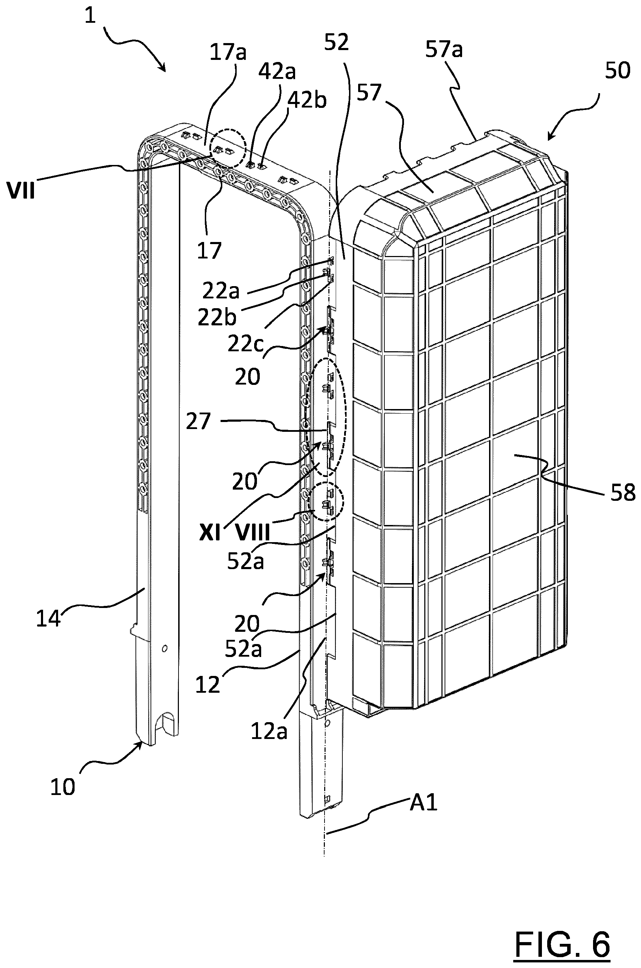

Each element of the third retaining elements 42a, 42b is identical to the elements of the first retaining elements 22a, 22b, 22c and of the second retaining elements 32a, 32b, 32c. In the not-limiting example of Figures 3 and 6, four groups of third retaining elements 42a, 42b are provided on the third wall 17 of the frame 10, each group having two third retaining elements 42a, 42b.

The frame 10 of the embodiment shown in the figures comprises a plurality of first groups of first retaining elements 22a, 22b, 22c in the first wall 12 of the frame 10, a plurality of second groups of second retaining elements 32a, 32b, 32c in the second wall 14 of the frame 10 and a plurality of third groups of third retaining elements 42a, 42b in the third wall 17 of the frame 10, wherein each of the first groups and second groups has three retaining elements 22a, 22b, 22c and 32a, 32b, 32c, respectively, whereas each of the third groups has two retaining elements 42a, 42b.

Figures 9 and 10 show two different embodiments of the first retaining elements 22a, 22b, 22c. The channels 24 of the first retaining elements 22a, 22b, 22c of these two embodiments are identical and are dimensioned to rotatably house the cylindrical pin 28.

The only difference between the embodiments of figures 9 and 10 is in the height H1, H2 of the first retaining elements 22a, 22b, 22c from the outer surface 12a of the first wall 12 of the frame. The height H1 of the first retaining elements 22a, 22b, 22c of the embodiment of Figure 9 is equal to the diameter of the cylindrical pin 28 (with appropriate dimensional tolerance to allow rotation of the cylindrical pin 28 inside the channels 24), while the height H2 of the first retaining elements 22a, 22b, 22c of the embodiment of Figure 10 is greater than the diameter of the cylindrical pin 28 and lower than 150% of the diameter of the cylindrical pin 28.

As shown in Figures 1 and 2, since the free space between the frame 10 and the external box 200 in the lower part of the frame 10 and of the external box 200 is greater than that in the upper part of the frame 10 and of the external box 200, first retaining elements 22a, 22b, 22c and second retaining elements 32a, 32b, 32c that are a little bit bulkier, as for example those of the embodiment of Figure 10, can be used in the lower part of the frame 10 and first retaining elements 22a, 22b, 22c and second retaining elements 32a, 32b, 32c that are less bulky, as for example those of the embodiment of Figure 9, can be used in the upper part of the frame 10.

Figures 16 and 17 shows a second embodiment of a cable enclosure 1 according to the present disclosure. Elements and components being identical or functionally equivalent to respective elements and components of the cable enclosure 1 disclosed above with reference to Figures 1-15 are indicated with the same reference number and their description is not fully repeated.

The cable enclosure 1 of Figures 16 and 17 differs from the cable enclosure 1 of Figure 1-15 in that it further comprises a second lid 70 substantially identical to the first lid 50. This embodiment is provided when it is desired to close the opposite faces of the frame 10 by respective lids 50 and 70.

Embodiments are foreseen in which the cable enclosure 1 comprises only the second lid 70 and not also the first lid 50.

The second lid 70 is rotatably connected at a first wall 72 thereof to the second wall 14 of the frame 10 by a plurality of second hinge assemblies 80 that are identical to each other and to the first hinge assemblies 20 and are aligned to each other along the second longitudinal axis A2.

The second hinge assemblies 80 are evenly spaced apart from each other along the second longitudinal axis A2.

The second lid 70 has a substantially parallelepipedal shape.

The first wall 72 of the second lid 70 extends along a vertical direction and defines a first lateral wall of the second lid 70.

The second lid 70 also comprises a second wall 74 which is parallel and opposite to the first wall 72. Thus, the second wall 74 extends along a vertical direction as well. The second wall 74 has a length equal to the length of the first wall 72 and is substantially identical to the first wall 72.

The second lid 70 further comprises a front wall 78 that connects the first wall 72 to the second wall 74. The front wall 78 is perpendicular to the first wall 72 and the second wall 74.

The second lid 70 also comprises a top wall 77 and a bottom wall 79, both of them being connected to the front wall 78. Furthermore, both the top wall 77 and the bottom wall 79 connect the first wall 72 to the second wall 74. The bottom wall 79 has a length equal to the length of the top wall 77.

The top wall 77 and the bottom wall 79 are parallel to each other and are perpendicular to the front wall 78. The top wall 77 and the bottom wall 79 are perpendicular to the first wall 72 and to the second wall 74.

The second lid 70 also comprises a cavity 75 delimited by the first wall 72, the second wall 74, the top wall 77, the bottom wall 79 and the front wall 78.

The cavity 75 is arranged in front of the connection space 15 of the frame 10 when the second lid 70 is in a closed position, i.e. is in the position shown in Figure 17. The cavity 75 is configured to house at least part of the cable connections.

In the not-limiting example of Figure 16, three second hinge assemblies 80 are provided on the second wall 14 of the frame 10.

The second hinge assemblies 80 are arranged at staggered positions with respect to the first hinge assemblies 20 along the second longitudinal axis A2.

Each second hinge assembly 80 comprises three second retaining elements 32a, 32b, 32c projecting outwardly from the outer surface 14a of the second wall 14 of the frame 10 and a second mounting element 87 projecting outwardly from the first wall 72 of the second lid 70.

The three second retaining elements 32a, 32b, 32c are identical to the three first retaining elements 22a, 22b, 22c, respectively.

As shown in Figure 17, the cable enclosure 1 further comprises a plurality of second locking members 90 identical to each other and to the first locking member 30 and aligned to each other along the first longitudinal axis A1. The second locking members 90 releasably locks the second lid 70 to the frame 10 at the second wall 74 of the second lid 70 and the first wall 12 of the frame 10.

In the not-limiting example of Figure 17, three second locking members 90 are provided on the first wall 12 of the frame 10. The second locking members 90 are evenly spaced apart from each other along the first longitudinal axis A1. All the second locking members 90 are identical to each other.

The second locking members 90 are arranged at staggered positions with respect to the first locking members 30 along the first longitudinal axis A1.

Each second locking member 90 comprises three first retaining elements 22a, 22b, 22c and four second locking elements 97 projecting outwardly from the second wall 74 of the second lid 70. The second locking elements 97 are identical to the first locking elements 37 and are configured to be snap coupled to the three first retaining elements 22a, 22b, 22c.

Each of the three second retaining elements 32a, 32b, 32c on the second wall 14 of the frame 10 is aligned to a respective retaining element of the three first retaining elements 22a, 22b, 22c on the first wall 12 of the frame 10 along a transversal direction perpendicular to the first longitudinal axis A1. Accordingly, the arrangement of the second retaining elements 32a, 32b, 32c on the second wall 14 of the frame 10 is identical to that of the first retaining elements 22a, 22b, 22c on the first wall 12 of the frame 10.

Thus, the frame 10 comprises second retaining elements 32a, 32b, 32c at the second wall 14 of the frame 10 that cooperate with a respective mounting element 87 provided at the first wall 72 of the second lid 70 and first retaining elements 22a, 22b, 22c at the first wall 12 of the frame 10 that are aligned to the abovementioned second retaining elements 32a, 32b, 32c along a transversal direction perpendicular to the second longitudinal direction A2 and that cooperate with the second locking elements 97 provided at the second wall 74 of the second lid 70. Accordingly, any couple formed of first retaining elements 22a, 22b, 22c and second retaining elements 32a, 32b, 32c defines a component of a second locking member 90 and a component of a second hinge assembly 80.

In particular, the first wall 12 of the frame 10 comprises three first hinge assemblies 20 and three second locking members 90 (Figure 17) and the second wall 14 of the frame 10 comprises three second hinge assemblies 80 and three first locking members 30 (Figure 16).

The three first hinge assemblies 20 and three second locking members 90 are alternated along the first wall 12 of the frame 10 (Figure 17). The three second hinge assemblies 80 and three first locking members 30 are alternated along the second wall 14 of the frame 10 (Figure 16).

In other words, when the first lid 50 is locked to the frame 10, each second hinge assembly 80 is arranged between two consecutive first locking members 30, or each first locking member 30 is arranged between two consecutive second hinge assemblies 80, along a direction parallel to the first longitudinal axis A1. When the second lid 70 is locked to the frame 10, each second locking member 90 is arranged between two consecutive first hinge assemblies 20, or each first hinge assembly 20 is arranged between two consecutive second locking members 90, along a direction parallel to the first longitudinal axis A1.

The three first hinge assemblies 20 are aligned to the three first locking members 30 along a transversal direction perpendicular to the first longitudinal direction A1 and the three second hinge assemblies 80 are aligned to the three second locking members 90 along a transversal direction perpendicular to the second longitudinal direction A2.

In an embodiment not shown, only two second locking members 90 can be provided on the first wall 12 of the frame 10, one in the upper part of the first wall 12 and another in the lower part of the first wall 12. In this case the opening of the second lid 70 can more easily occur by pulling the second wall 74 of the second lid 70 away from the first wall 12 of the frame 10 with two hands, one hand being positioned at the upper part of the second wall 74 of the second lid 70 and the other hand being positioned at the lower part of the second wall 74 of the second lid 70.

As shown in Figure 17, the second wall 74 of the second lid 70 comprises a recessed portion 74a between two consecutive second locking members 90. When the second lid 70 is locked to the frame 10, a second locking member 90 is at least partially arranged in a respective recessed portion 52a of the first wall 52 of the first lid 50.

As shown in Figure 16, the first wall 72 of the second lid 70 comprises a recessed portion 72a between two consecutive second hinge assemblies 80. When the first lid 50 is locked to the frame 10, a first locking member 30 is at least partially arranged in a respective recessed portion 72a of the first wall 72 of the second lid 70.

As sown in Figure 17, the top wall 57 of the first lid 50 and the top wall 77 of the second lid 70 comprise a plurality of recessed portions 57a, 77a that are provided to face to each other in order to avoid any interference with the third retaining elements 42a, 42b at the third wall 17 of the frame 10 when the first lid 50 and the second lid 70 are in the respective closed positions.

Instead of being of the type described above with reference to Figure 17, the second locking members 90 can be of the type shown in Figures 17A and 17B and described below.

In this case, each second locking member 90 comprises two first retaining elements 22a, 22c of the three retaining elements 22a, 22b, 22c provided on the first wall 12 of the frame 10, these two first retaining elements 22a, 22c being aligned to each other.

Each second locking member 90 further comprises a single locking element 97' projecting outwardly from the second wall 74 of the second lid 70. This locking element 97' is configured to be positioned in the area between the two first adjacent retaining elements 22a, 22c through a snap coupling with the two first adjacent retaining elements 22a, 22c.

A single shaped hole 97" is provided on the second wall 74 of the second lid 70 at the locking element 97'.

The shaped hole 97" has a longitudinal dimension greater than a longitudinal dimension of the first retaining elements 22a, 22b, 22c and a transversal dimension greater than a transversal dimension of the three first retaining elements 22a, 22b, 22c in order to house the other retaining element 22b of the three retaining elements 22a, 22b, 22c provided on the first wall 12 of the frame 10 when the second lid 70 is in the closed position.

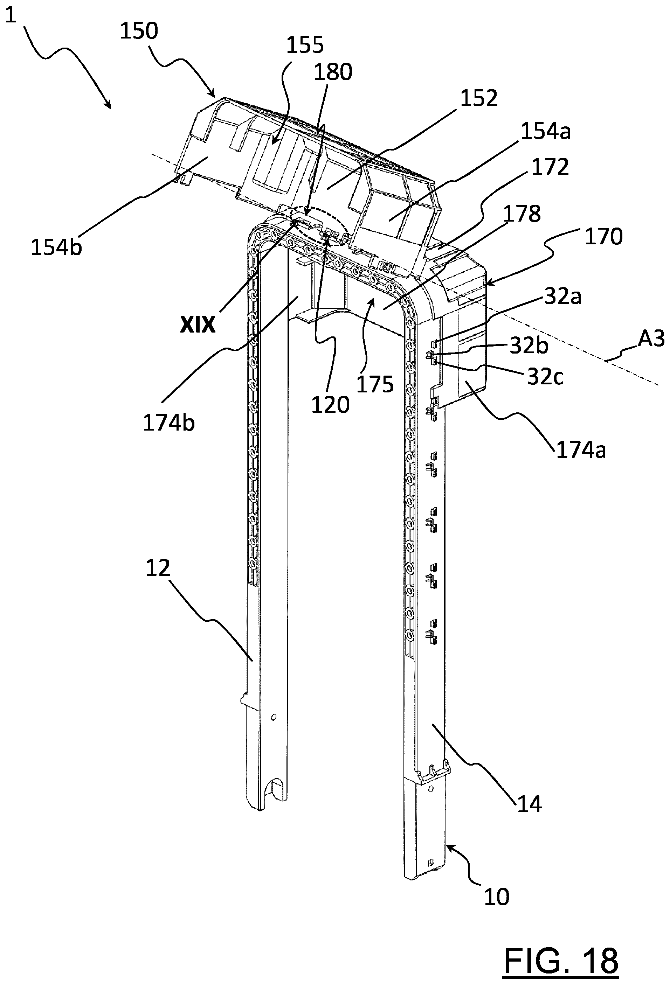

Figures 18-23 show a third embodiment of a cable enclosure 1 according to the present disclosure. Elements and components being identical or functionally equivalent to respective elements and components of the cable enclosure 1 disclosed above with reference to Figures 16 and 17 are indicated with the same reference number and their description is not fully repeated.

The cable enclosure 1 of Figures 18-23 differs from the cable enclosure 1 of Figures 16 and 17 in that the first lid 50 and the second lid 70 are substituted by a first lid 150 hinged at the third wall 17 of the frame 10 and a second lid 170 also hinged at the third wall 17 of the frame 10. This embodiment is provided when it is desired to close the opposite faces of only the upper part of the frame 10.

Further embodiments are foreseen in which the cable enclosure 1 includes only one of the first lid 150 and second lid 170 or wherein the cable enclosure includes both the first lid 50 and the first lid 150 or both the second lid 70 and the second lid 170 or the first lid 150 and the second lid 170 or the second lid 70 and the first lid 150.

The second lid 170 is substantially identical to the first lid 150.

A first wall 152 of the first lid 150 is rotatably connected to the third wall 17 of the frame 10 by a plurality of third hinge assemblies 120.

The plurality of third hinge assemblies 120 are aligned to each other along a third longitudinal axis A3, which extends along a horizontal direction.

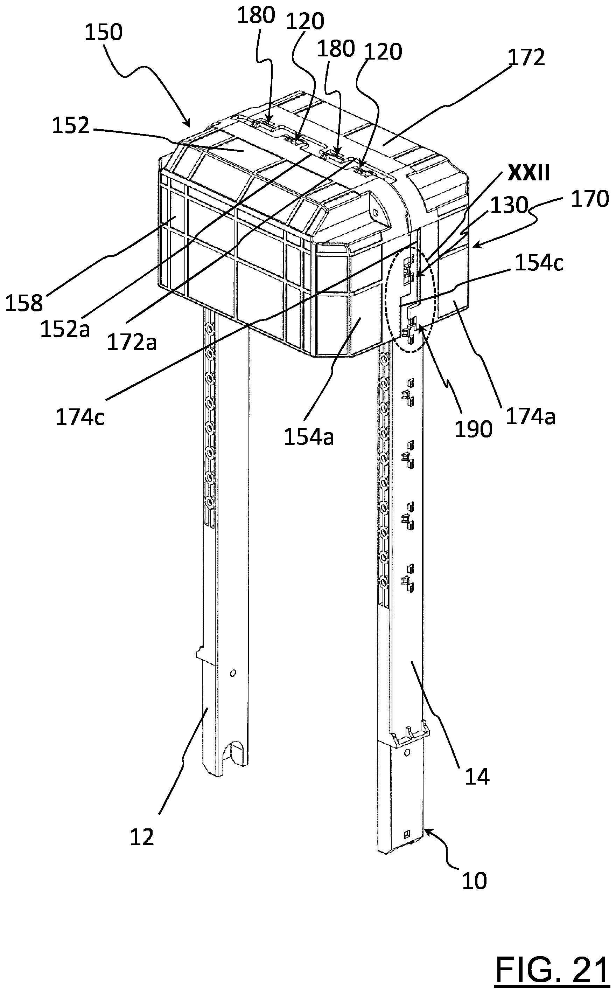

In the not-limiting example of Figures 18 and 21, two third hinge assemblies 120 are provided on the third wall 17 of the frame 10. The third hinge assemblies 120 are evenly spaced apart from each other. All the third hinge assemblies 120 are identical to each other.

As shown in Figure 19, each third hinge assembly 120 comprises two third retaining elements 42a, 42b and a third mounting element 127 projecting outwardly from a free edge of the first wall 152 of the first lid 150, away from a front wall 158 of the first lid 150.

The first lid 150 has a substantially parallelepipedal shape.

The first wall 152 extends along a horizontal direction and is a top wall of the first lid 150. The length of the first wall 152 of the first lid 150 along the third longitudinal axis A3 is equal to the length of the third wall 17 of the frame 10 along the third longitudinal axis A3.

The first lid 150 comprises opposite second walls 154a, 154b which are connected to the first wall 152 and extend along respective vertical directions. The opposite second walls 154a, 154b are parallel to each other and are perpendicular to the first wall 152. The second wall 154b has a length along a vertical direction equal to the length along a vertical direction of the second wall 154a and is substantially identical to the second wall 154a.

The front wall 158 of the first lid 150 connects the second walls 154a, 154b. The first wall 152 and the second walls 154a, 154b are perpendicular to the front wall 158.

The first lid 150 comprises a cavity 155 delimited by the first wall 152, the second walls 154a, 154b and the front wall 158.

The cavity 155 is arranged in front of the connection space 15 of the frame 10 when the first lid 150 is in a closed position, i.e. in the position shown in Figure 21. The cable connections can be at least partly housed in the cavity 155.

A first wall 172 of the second lid 170 is rotatably connected to the third wall 17 of the frame 10 by a plurality of fourth hinge assemblies 180.

The plurality of fourth hinge assemblies 180 are aligned to each other along the third longitudinal axis A3, and thus are aligned to the third hinge assemblies 120 too.

In the not-limiting example of Figures 18 and 21, two fourth hinge assemblies 180 are provided on the third wall 17 of the frame 10. The fourth hinge assemblies 180 are evenly spaced apart from each other. All the fourth hinge assemblies 180 are identical to each other.

As shown in Figure 19, each fourth hinge assembly 180 comprises two third retaining elements 42a, 42b and a fourth mounting element 187 projecting outwardly from a free edge of the first wall 172 of the second lid 170, away from a front wall 178 of the second lid 170.

The second lid 170 has a substantially parallelepipedal shape.

The first wall 172 extends along a horizontal direction and is a top wall of the second lid 170. The length of the first wall 172 of the second lid 170 along the third longitudinal axis A3 is equal to the length of the third wall 17 of the frame 10 along the third longitudinal axis A3.

The second lid 170 comprises opposite second walls 174a, 174b which are connected to the first wall 172 and extend along respective vertical directions. The opposite second walls 174a, 174b are parallel to each other and are perpendicular to the first wall 172. The second wall 174b has a length along a vertical direction equal to the length along a vertical direction of the second wall 174a and is substantially identical to the second wall 174a.

The front wall 178 of the second lid 170 connects the second walls 174a, 174b. The first wall 172 and the second walls 174a, 174b are perpendicular to the front wall 178.

The second lid 170 comprises a cavity 175 delimited by the first wall 172, the second walls 174a, 174b and the front wall 178.

The cavity 175 is arranged in front of the connection space 15 of the frame 10 when the second lid 170 is in a closed position, i.e. is in the position shown in Figures 18 and 21. The cable connections can be at least partly housed in the cavity 175.

As shown in Figures 19 and 20, the third hinge assemblies 120 are identical to the fourth hinge assemblies 180. The third hinge assemblies 120 are described below and this description also applies to the fourth hinge assemblies 180, *mutatis mutandis.*

The third mounting element 127 comprises a cylindrical pin 28 and a third connecting portion 129 that connects the cylindrical pin 28 to the first wall 152.

The third connecting portion 129 comprises an end portion 129a adjacent to the cylindrical pin 28 and having a thickness lower than a thickness of the remaining portion 129c of the third connecting portion 129 and lower than the predetermined diameter of the cylindrical pin 28.

The end portion 129a extends along the third longitudinal axis A3 for only part of the length of the third connecting portion 129, as shown in figures 19 and 20. However, in different embodiments not shown the end portion 129a can extend along the third longitudinal axis A3 for the whole length of the third connecting portion 129, like for example the end portion 29a shown in figures 5 and 11 and described above.

The remaining portion 129c of the third connecting portion 129 of the first lid 150 can have a thickness equal to a thickness of the first wall 152 of the first lid 150.

In the not-limiting example of Figure 19, the diameter of the cylindrical pin 28 is substantially equal to the thickness of the remaining portion 129c of the third connecting portion 129 of the first lid 150.

As shown in figures 19 and 20, the end portion 129a is configured to slide into the longitudinal opening 25 of each of the channels 24 so as to house the cylindrical pin 28 inside the channels 24 upon a sliding movement of the first lid 150 with respect to the frame 10 along a reference axis A3' parallel to the third longitudinal axis A3 (see arrow B in Figure 20). As shown in Figure 20, this sliding movement occurs when the first lid 150 is at a predetermined angular position with respect to the frame 10, that is when the first wall 152 of the first lid 150 is at a predetermined opening angle with respect to the third wall 17 of the frame 10. In the not-limiting example of Figure 20, the predetermined opening angle is equal to 90°.

The third connecting portion 129 further comprises a third shaped hole 129b at each of the two third retaining elements 42a, 42b.

The third shaped hole 129b has a longitudinal dimension greater than a longitudinal dimension of each of the two third retaining elements 42a, 42b and a transversal dimension greater than a transversal dimension of each of the two third retaining elements 42a, 42b.

As shown in Figures 18 and 21-23, the cable enclosure 1 further comprises a third locking member 130. The third locking member 130 releasably locks the first lid 150 to the frame 10 at the second wall 154a of the first lid 150 and the second wall 14 of the frame 10.

In the not-limiting example of Figures 18 and 21-23, only one third locking member 130 is provided. However, a plurality of third locking members 130 aligned to each other along the second longitudinal axis A2 and evenly spaced apart from each other can be provided. All the third locking members 30 are identical to each other.

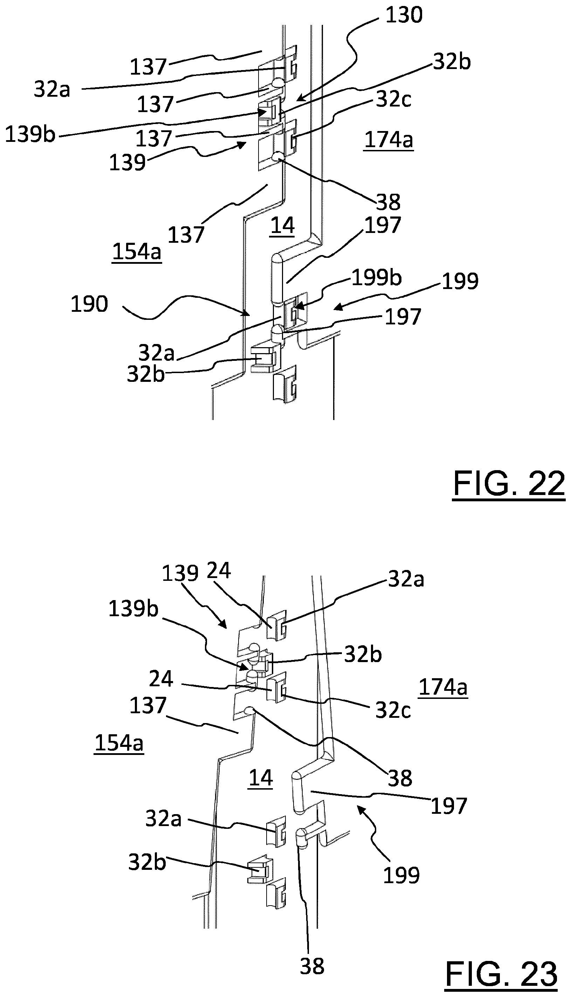

As shown in Figure 22, the third locking member 130 comprises three second retaining elements 32a, 32b, 32c and four third locking elements 137 projecting outwardly from the second wall 154a of the first lid 150. In the not-limiting example of Figure 22, the third locking elements 137 have a thickness equal to a thickness of the second wall 154a of the first lid 150.

As shown in Figures 22 and 23, the third locking elements 137 are configured to be snap coupled to the three second retaining elements 32a, 32b, 32c.

Figure 22 shows a configuration of the third locking member 130 wherein the second wall 154a of the first lid 150 is locked to the second wall 14 of frame 10, while Figure 23 shows a different configuration of the third locking member 130 wherein the second wall 154a of the first lid 150 is unlocked from the second wall 14 of the frame 10.

The third locking elements 137 are made in a single piece with the second wall 154a of the first lid 150.

The second wall 154a of the first lid 150 is made in a single piece with a remaining part of the first lid 150.

As shown in Figures 22 and 23, the third locking elements 137 comprises one or two opposite protrusions 38 configured to be housed in a respective channel 24 of the three second retaining elements 32a, 32b, 32c. The housing of the protrusions 38 in the channels 24 formed in the second retaining elements 32a, 32b, 32c is obtained through a snap coupling between the protrusions 38 and the second retaining elements 32a, 32b, 32c.

The third locking member 130 comprises a third connecting portion 139 that connects the first locking elements 137 to the second wall 154a of the first lid 150. In the not-limiting example of Figures 18 and 21-23, the third connecting portion 139 of the first lid 150 has a thickness equal to a thickness of the second wall 154a of the first lid 150.

The third connecting portion 139 comprises a third shaped hole 139b at each of the three third retaining elements 32a, 32b, 32c.

The third shaped hole 139b has a longitudinal dimension greater than a longitudinal dimension of each of the three second retaining elements 32a, 32b, 32c and a transversal dimension greater than a transversal dimension of each of the three second retaining elements 32a, 32b, 32c.

The third locking elements 137 projects from a free edge of the second wall 154a of the first lid 150 away from the front wall 158 of the first lid 150.

As shown in Figure 21, the third wall 152 of the first lid 150 comprises recessed portions 152a that are provided in order to avoid any interference with the third retaining elements 42a, 42b at the third wall 17 of the frame 10.

As shown in Figures 18 and 21-23, the second wall 154a of the first lid 150 comprises a recessed portion 154c provided in order to avoid any interference with the second retaining elements 32a, 32b, 32c at the second wall 14 of the frame 10.

As shown in Figures 18 and 21-23, the cable enclosure 1 further comprises a fourth locking member 190. The fourth locking member 190 releasably locks the second lid 170 to the frame 10 at the second wall 174a of the second lid 170 and the second wall 14 of the frame 10.

In the not-limiting example of Figures 18 and 21-23, only one fourth locking members 130 is provided. However, a plurality of fourth locking members 130 aligned to each other along the second longitudinal axis A2 and evenly spaced apart from each other can be provided. All the fourth locking members 190 are identical to each other.

As shown in Figure 22, the fourth locking member 190 comprises two second retaining elements 32a, 32b and two fourth locking elements 197 projecting outwardly from the second wall 174a of the second lid 170. In the not-limiting example of Figure 22, the fourth locking elements 197 have a thickness equal to a thickness of the second wall 154a of the second lid 170.

As shown in Figures 22 and 23, the fourth locking elements 197 are configured to be snap coupled to the two second retaining elements 32a, 32b. Figure 22 shows a configuration of the fourth locking member 190 wherein the second wall 174a of the second lid 170 is locked to the second wall 14 of frame 10, while Figure 23 shows a different configuration of the fourth locking member 190 wherein the second wall 174a of the second lid 170 is unlocked from the second wall 14 of the frame 10.

The fourth locking elements 197 are made in a single piece with the second wall 174a of the second lid 170.

The second wall 174a of the second lid 170 are made in a single piece with a remaining part of the second lid 170.

As shown in Figures 22 and 23, the fourth locking elements 197 comprise one or two opposite protrusions 38 configured to be housed in a respective channel 24 of the two second retaining elements 32a, 32b. The housing of the protrusions 38 in the channels 24 formed in the second retaining elements 32a, 32b is obtained through a snap coupling between protrusions 38 and second retaining elements 32a, 32b.

The fourth locking member 190 comprises a fourth connecting portion 199 that connects the first locking elements 197 to the second wall 174a of the second lid 170. In the not-limiting example of Figures 18 and 21-23, the fourth connecting portion 199 of the second lid 170 has a thickness equal to a thickness of the second wall 174a of the second lid 170.

The fourth connecting portion 199 comprises a fourth shaped hole 199b at each of the two third retaining elements 32a, 32b.

The fourth shaped hole 199b has a longitudinal dimension greater than a longitudinal dimension of each of the two second retaining elements 32a, 32b and a transversal dimension greater than a transversal dimension of each of the two second retaining elements 32a.

The fourth locking elements 197 project from a free edge of the second wall 174a of the second lid 170 away from the front wall 178 of the second lid 170.

In different embodiments not shown, the fourth locking member 190 can be of the type described above with reference to figures 17A and 17B.

As shown in Figure 21, the third wall 172 of the second lid 170 comprises recessed portions 172a provided in order to avoid any interference with the third retaining elements 42a, 42b at the third wall 17 of the frame 10.

As shown in Figures 18 and 21-23, the second wall 174a of the second lid 170 comprises a recessed portion 174c provided in order to avoid any interference with the second retaining elements 32a, 32b at the second wall 14 of the frame 10.

The cable enclosure 1 of Figures 18-23 can comprise further locking members (not shown in detail) which releasably lock the first lid 150 to the frame 10 at the second wall 154b of the first lid 150 and the first wall 12 of the frame 10 and/or which releasably lock the second lid 170 to the frame 10 at the second wall 174b of the second lid 170 and the first wall 12 of the frame 10. The further locking members can be of the same type as the third or fourth locking members 130, 190.

## Claims

1. A cable enclosure (1) comprising:
- a frame (10);
- a first lid (50; 150);
- a first hinge assembly (20; 120) that rotatably connects the first lid (50; 150) to the frame (10), the first hinge assembly (20, 120) comprising at least two first retaining elements (22a, 22b, 22c; 42a, 42b) projecting outwardly from an outer surface (12a; 17a) of a first wall (12; 17) of the frame (10) and at least one first mounting element (27; 127) projecting outwardly from a first wall (52; 152) of the first lid (50; 150);
wherein the at least two first retaining elements (22a, 22b, 22c; 42a, 42b) are arranged in staggered positions on opposite sides with respect to a first longitudinal axis (A1; A3) defined on the first wall (12; 17) of the frame (10), each of the at least two first retaining elements (22a, 22b, 22c; 42a, 42b) comprising a respective channel (24) extending along a reference axis (A1'; A3') parallel to said first longitudinal axis (A1; A3) and having a longitudinal opening (25) facing said reference axis (A1'; A3');
wherein the at least one first mounting element (27; 127) comprises a cylindrical pin (28) rotatably housed in said channels (24) and a first connecting portion (29; 129) that connects the cylindrical pin (28) to the first wall (52; 152) of the first lid (50; 150);
wherein the first connecting portion (29; 129) comprises an end portion (29a; 129a) adjacent to the cylindrical pin (28) and having a thickness lower than a diameter of the cylindrical pin (28), said end portion (29a; 129a) being configured to slide into the longitudinal opening (25) of each of said channels (24) so as to house the cylindrical pin (28) inside said channels (24) upon a sliding movement of the first lid (50; 150) with respect to the frame (10) along said reference axis (A1'; A3').

2. The cable enclosure (1) according to claim 1, wherein the at least two first retaining elements (22a, 22b, 22c; 42a, 42b) have a height from the first wall (12; 17) of the frame (10) substantially equal to the diameter of the cylindrical pin (28).

3. The cable enclosure (1) according to claim 1 or 2, wherein the first connecting portion (29; 129) is a straight extension of the first wall (52; 152).

4. The cable enclosure (1) according to any of the previous claims, wherein the first connecting portion (29; 129) comprises a first shaped hole (29b; 129b) at each of the at least two first retaining elements (22a, 22b, 22c; 42a, 42b), said first shaped hole (29b; 129b) having a longitudinal dimension greater than a longitudinal dimension of each of the at least two first retaining elements (22a, 22b, 22c; 42a, 42b) and a transversal dimension greater than a transversal dimension of each of the at least two first retaining elements (22a, 22b, 22c; 42a, 42b).

5. The cable enclosure (1) according any of the previous claims, wherein the frame (10) comprises a second wall (14) and a connection space (15) arranged between the first wall (12) of the frame (10) and the second wall (14) of the frame (10).

6. The cable enclosure (1) according to claim 5, wherein the first lid (50; 150) comprises a second wall (54; 154a, 154b) and the cable enclosure (1) comprises at least one first locking member (30; 130) that releasably locks the first lid (50; 150) to the frame (10) at the second wall (54; 154a, 154b) of the first lid (50; 150) and the second wall (14) of the frame (10).

7. The cable enclosure (1) according to claim 6, wherein at least two second retaining elements (32a, 32b, 32c) identical to the at least two first retaining elements (22a, 22b, 22c; 42a, 42b) project outwardly from an outer surface (14a) of the second wall (14) of the frame (10) and wherein the at least one first locking member (30; 130) comprises said at least two second retaining elements (32a, 32b, 32c) and at least one first locking element (37; 137) projecting outwardly from the second wall (54; 154a, 154b) of the first lid (50; 150) and configured to be snap coupled to said at least two second retaining elements (32a, 32b, 32c).

8. The cable enclosure (1) according to claim 7, wherein the at least one first locking member (37; 137) comprises a second connecting portion (39; 139) that connects the at least one first locking element (37; 137) to the second wall (54; 154a, 154b) of the first lid (50; 150), wherein the second connecting portion (39; 139) comprises a second shaped hole (39b; 139b) at at least one of the at least two second retaining elements (32a, 32b, 32c), said second shaped hole (39b; 139b) having a longitudinal dimension greater than a longitudinal dimension of the at least one of the at least two second retaining elements (32a, 32b, 32c) and a transversal dimension greater than a transversal dimension of the at least one of the at least two second retaining elements (32a, 32b, 32c).

9. The cable enclosure (1) according to any of claims 5 to 8, wherein the frame (10) comprises a third wall (17) perpendicular to the first wall (12) of the frame (10) and connecting the first wall (12) of the frame (10) to the second wall (14) of the frame (10), wherein the cable enclosure (1) comprises at least two third retaining elements (42a, 42b) identical to the at least two first retaining elements (22a, 22b, 22c) and projecting outwardly from an outer surface (17a) of the third wall (17) of the frame (10).

10. The cable enclosure (1) according to any of claims 5 to 9, further comprising:
- a second lid (70) substantially identical to the first lid (50);
- a second hinge assembly (80) that rotatably connects the second lid (70) to the frame (10) at the second wall (14) of the frame (10), the second hinge assembly (80) being identical to the first hinge assembly (20);
wherein the second hinge assembly (80) comprises said at least two second retaining elements (32a, 32b, 32c) and at least one second mounting element (87) projecting outwardly from a first wall (72) of the second lid (70).

11. The cable enclosure (1) according to claim 10, wherein the second lid (70) comprises a second wall (74) parallel to the first wall (72) of the second lid (70) and a front wall (78) that connects the first wall (72) of the second lid (70) to the second wall (74) of the second lid (70), and wherein the cable enclosure (1) comprises at least one second locking member (90) identical to the at least one first locking member (30) and that releasably locks the second lid (70) to the frame (10) at the second wall (74) of the second lid (70) and the first wall (12) of the frame (10).

12. The cable enclosure (1) according to claim 11, wherein the at least one second locking member (90) comprises said at least two first retaining elements (22a, 22b, 22c) and at least one second locking element (97, 97') projecting outwardly from the second wall (74) of the second lid (70) and configured to be snap coupled to said at least two first retaining elements (22a, 22b, 22c).

13. The cable enclosure (1) according to any of the previous claims, wherein the cable enclosure (1) is made of a moulded plastic material.

14. The cable enclosure (1) according to claim 13, wherein the at least two first retaining elements (22a, 22b, 22c; 42a, 42b) are made in a single piece with the first wall (12; 17) of the frame (10) and the at least one first mounting element (27; 127) is made in a single piece with the first wall (52; 152) of the first lid (50; 150).

15. A cable protection system (100), comprising an external box (200) and a cable enclosure (1) according to any of the previous claims, wherein the cable enclosure (1) in arranged within the external box (200).
